(19) **Europäisches Patentamt / European Patent Office / Office européen des brevets**

(11) **EP 4 773 189 A1**

(12) **EUROPEAN PATENT APPLICATION**
published in accordance with Art. 153(4) EPC

(43) Date of publication:
08.07.2026 Bulletin 2026/28

(21) Application number: 25846465.0

(22) Date of filing: 14.04.2025

(51) International Patent Classification (IPC):
$H01M\ 4/02^{(2006.01)}$ $H01M\ 4/13^{(2010.01)}$
$H01M\ 50/528^{(2021.01)}$

(52) Cooperative Patent Classification (CPC):
H01M 4/02; H01M 4/13; H01M 50/528

(86) International application number:
PCT/CN2025/088763

(87) International publication number:
WO 2026/026017 (05.02.2026 Gazette 2026/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.07.2024 CN 202421847945 U
19.11.2024 CN 202422836055 U
21.11.2024 CN 202411676417

(71) Applicant: Eve Power Co., Ltd.
Jingmen, Hubei 448000 (CN)

(72) Inventors:
• QU, Hongjiao
Jingmen, Hubei 448000 (CN)

• DING, Jing
Jingmen, Hubei 448000 (CN)
• LI, Wangxuan
Jingmen, Hubei 448000 (CN)
• HE, Meng
Jingmen, Hubei 448000 (CN)
• LIU, Hanxiang
Jingmen, Hubei 448000 (CN)

(74) Representative: Stöckeler, Ferdinand et al
Schoppe, Zimmermann, Stöckeler
Zinkler, Schenk & Partner mbB
Patentanwälte
Radlkoferstrasse 2
81373 München (DE)

(54) **ELECTRODE ASSEMBLY, BATTERY, BATTERY PACK AND DESIGN METHOD FOR ELECTRODE ASSEMBLY**

(57) Disclosed are an electrode assembly, a battery, a battery pack, and a method of designing an electrode assembly. The electrode assembly includes an electrode plate structure and at least one tab structure. The tab structure includes a plurality of tabs, and the plurality of tabs are disposed on one side of the electrode plate structure and are connected to the electrode plate structure; where at least two adjacent tabs have different sizes.

EP 4 773 189 A1

1000

FIG. 1

## Description

The present disclosure claims the benefit of priority of Chinese Patent Applications 202411676417.X filed on November 21, 2024, 202422836055.8 filled on November 19, 2024, and 202421847945.2 filled on July 31, 2024, with the China National Intellectual Property Administration, the contents of which are incorporated herein by reference in their entirety.

TECHNICAL FIELD

The present disclosure belongs to the technical field of batteries, and in particular, relates to an electrode assembly, a battery, a battery pack, and a method of designing an electrode assembly.

BACKGROUND

Lithium-ion batteries belong to a metastable system, which is very sensitive to temperature. Too high temperature will significantly accelerate the decay rate of lithium-ion batteries. In the related arts, in order to control the temperature of lithium-ion batteries, the internal resistance of the batteries can be reduced by increasing the number of layers of the tabs, thereby increasing the uniformity of current density distribution, reducing the polarization during charging and discharging of the batteries, and reducing the overall temperature of the batteries.

SUMMARY

However, due to the increase in the number of layers of the tabs, it is difficult to ensure that each layer of the tabs are welded together in the assembly and molding process of the batteries, and it is difficult to ensure that the welding ranges among multiple tabs remain consistent, resulting in inconsistent battery internal resistance, thereby causing poor uniformity of the batteries.

In a first aspect, the present disclosure provides an electrode assembly, which includes:

an electrode plate structure; and
at least one tab structure including a plurality of tabs, and the plurality of tabs are disposed on one side of the electrode plate structure and are connected to the electrode plate structure;
in which at least two adjacent ones of the plurality of tabs are different in size.

In a second aspect, the present disclosure provides a battery, which includes:

at least one electrode assembly; and
a cover plate assembly connected to the tab structure of the electrode assembly.

In a third aspect, the present disclosure provides a battery pack including batteries.

In a fourth aspect, the present disclosure provides a method of designing an electrode assembly, which is applied to batteries, the method includes:

obtaining a maximum height of a tab and a minimum height of a tab based on the design parameters of a battery; and
allowing heights of the tabs in odd-numbered locations to have an opposite gradient trend to heights of the tabs in even-numbered locations in a winding direction, and allowing projections of all the tabs welded to the tab connecting portion of a same connecting plate in a same jelly roll to be at least partially overlapped in a first direction.

BENEFICIAL EFFECTS

The electrode assembly according to embodiments of the present disclosure includes an electrode plate structure and at least one tab structure, the tab structure includes a plurality of tabs, and the plurality of tabs are disposed on one side of the electrode plate structure and are connected to the electrode plate structure; in which at least two adjacent ones of the plurality of tabs are different in size. According to the electrode assembly provided in embodiments of the present disclosure, the plurality of tabs with different sizes are stacked together, so that it is convenient to clamp them together by using a fixture in the related arts, and it is ensured that after the tab structure is bent, the multiple layers of tabs are welded together during ultrasonic welding, so that the ends of the bent tabs away from the tab structure are basically aligned with each other, and the welding range among the tabs is consistent, so as to avoid the risk of missing welding.

BRIEF DESCRIPTION OF THE DRAWINGS

FIG. 1 is a three-dimensional schematic diagram of an electrode assembly in a battery according to embodiments of the present disclosure;

FIG. 2 is an enlarged schematic diagram of part A in FIG. 1;

FIG. 3 is a structural schematic diagram of an electrode assembly in a battery according to embodiments of the present disclosure;

FIG. 4 is a structural schematic diagram of a tab body according to embodiments of the present disclosure;

FIG. 5 is a schematic diagram of the arrangement of part of the tab body in the tab structure according to embodiments of the present disclosure;

FIG. 6 is a graph showing temperature change of a pole when a battery according to embodiments of the present disclosure and a battery according to the related arts are charged at a current of a nominal capacity;

FIG. 7 is a graph showing temperature change of a large surface of a battery when the battery according to embodiments of the present disclosure and the battery according to the related arts are charged at a current of a nominal capacity;

FIG. 8 is a graph showing change of DC internal resistance of a battery according to embodiments of the present disclosure and the battery according to the related arts during charging;

FIG. 9 is a graph showing change of DC internal resistance of a battery according to embodiments of the present disclosure and the battery according to the related arts during discharging;

FIG. 10 is a structural schematic diagram of an electrode assembly according to embodiments of the present disclosure;

FIG. 11 is a structural schematic diagram of a tab according to embodiments of the present disclosure;

FIG. 12 is a structural schematic diagram of a tab according to embodiments of the present disclosure;

FIG. 13 is a structural schematic diagram of a tab according to embodiments of the present disclosure;

FIG. 14 is a schematic diagram of welding of a battery according to embodiments of the present disclosure;

FIG. 15 is a bottom view of FIG. 14;

FIG. 16 is a structural schematic diagram of an electrode assembly according to embodiments of the present disclosure;

FIG. 17 is a structural schematic diagram of a main body portion according to embodiments of the present disclosure when winding to form a jelly roll;

FIG. 18 is a structural schematic diagram of a main body portion according to embodiments of the present disclosure when winding to form a jelly roll and the tabs are bent and welded to the connecting plate;

FIG. 19 is a top view of a jelly roll according to embodiments of the present disclosure;

FIG. 20 is a cross-sectional view of a battery according to embodiments of the present disclosure;

FIG. 21 is a schematic diagram of a partial structure of core packs before stacking according to embodiments of the present disclosure;

FIG. 22 is a structural schematic diagram of a connecting plate according to embodiment of the present disclosure;

FIG. 23 is a flow chart of a method of designing an electrode plate structure according to embodiments of the present disclosure;

FIG. 24 is a flow chart of a method of obtaining a maximum height and a minimum height of a tab according to embodiments of the present disclosure;

FIG. 25 is a flow chart of a method of obtaining a distance between two core packs before stacking according to embodiments of the present disclosure; and

FIG. 26 is a flow chart of a method of obtaining a maximum height of a tab according to embodiments of the present disclosure.

List of reference signs:

1. electrode plate structure; 11. electrode plate body; 10. connection end; 2. tab structure; 21. tab; 3. first side; 4. second side; 5. welding surface;

10. winding body; 11A: positive electrode plate; 12. separator; 13. negative electrode plate; 2A. positive tab group; 3A first tab group; 4A second tab group; 5A negative tab group; 6 arc; 7 chamfer; 8. connecting plate; 81. positive electrode connecting plate; 82. negative electrode connecting plate.

1000. electrode assembly, 110. main body portion, 21, tab, 130. winding starting end, 140. winding terminating end, 160. proximal end, 20. jelly roll, 210. winding center surface, 30. housing, 310. housing cover, 410. connecting tab, 50. core pack.

DETAILED DESCRIPTION

The present disclosure provides an electrode assembly 1000. The electrode assembly 1000 includes an electrode plate structure 1 and at least one tab structure 2. The tab structure 2 includes a plurality of tabs 21, and the plurality of tabs 21 are disposed on one side of the electrode plate structure 1 and are connected to the electrode plate structure 1, in which at least two adjacent ones of the plurality of tabs are different in size.

In the technical solutions of the present disclosure, the plurality of tabs 21 with different sizes are stacked together, so that it is convenient to clamp them together by using a fixture in the related arts, and it is ensured that after the tab structure 2 is bent, the multiple layers of tabs 21 are welded together during ultrasonic welding, so that the ends of the bent tabs 21 away from the tab structure 2 are basically aligned with each other, and the welding range among the tabs is consistent, so as to avoid the risk of missing welding.

Based on this, various embodiments of the present disclosure are described below.

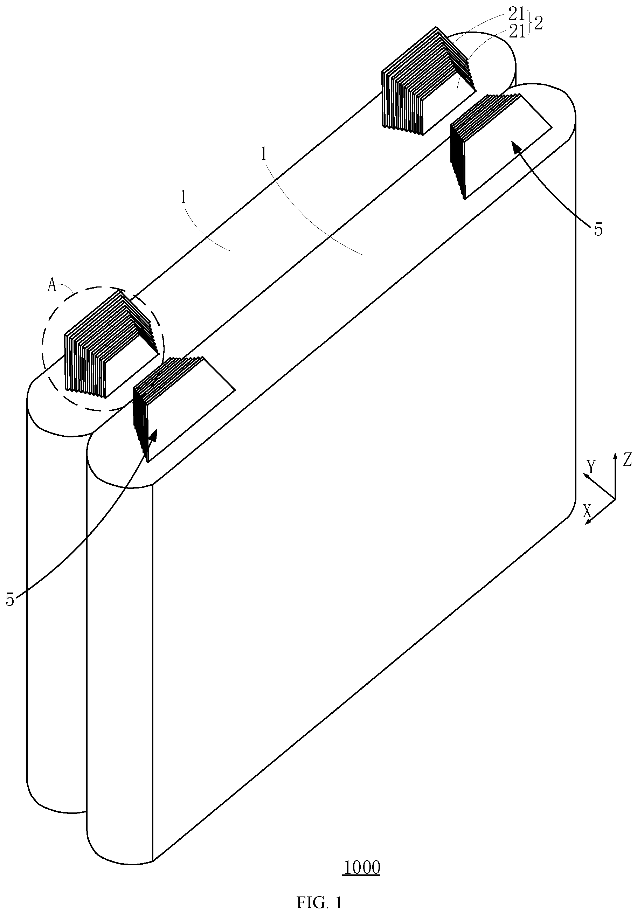

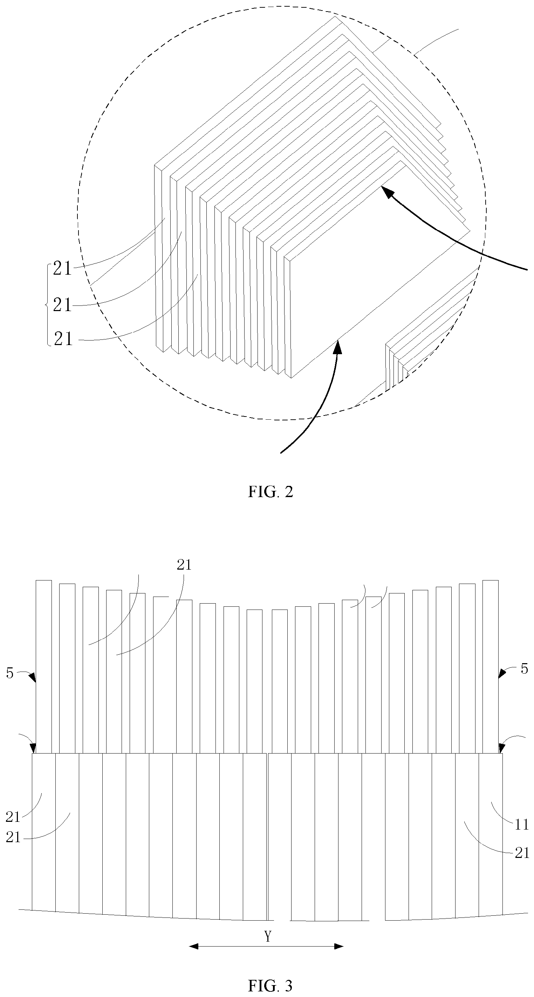

Referring to FIGs. 1 to 9, which show some embodiments of an electrode assembly 1000 provided in the present disclosure.

In FIGs. 1 to 9, X direction is defined as a third direction, Y direction is defined as a first direction, Z direction is defined as a second direction, in which the first direction Y and the second direction Z intersect each other, and the first direction Y and the second direction Z are respectively perpendicular to the third direction X. In an embodiment of the present disclosure, the first direction Y, the second direction Z and the third direction X are perpendicular to each other.

Referring to FIGs. 1 to 3, in some embodiments of the present disclosure, the electrode assembly 1000 includes an electrode plate structure 1 and at least one tab structure 2. The at least one tab structure 2 is located at one end of the electrode plate structure 1 and is connected to the electrode plate structure 1.

The electrode plate structure 1 includes a plurality of electrode plate bodies 11 stacked in a first direction Y. In an embodiment, the plurality of electrode plate bodies 11 are integrally formed and wound together to form an electrode plate structure 1. In another embodiment, the plurality of electrode plate bodies 11 are stacked.

In a case that the plurality of electrode plate bodies 11 are stacked, each of the plurality of electrode plate bodies 11 may exist independently, and the two adjacent electrode plate bodies 11 are not connected; or each of the plurality of electrode plate bodies 11 may be bent in a reciprocating manner in the first direction Y, so that at least a part of the reciprocally bent electrode plate body 11 may be opposite in the first direction Y, and the plurality of electrode plate bodies 11 are stacked together on the basis that the electrode plate bodies 11 are bent in a reciprocating manner in the first direction Y.

In an embodiment of the present disclosure, the plurality of electrode plate bodies 11 are integrally formed and wound together to form the electrode plate structure 1. That is, in this embodiment, the electrode assembly 1000 is formed by winding a positive electrode plate, a negative electrode plate, and a separator. The electrode plate body 11 is a partial structure of the positive electrode plate and the negative electrode plate. Tabs 21 connected to the positive electrode plate are positive tabs, and tabs 21 connected to the negative electrode plate are negative tabs.

Each electrode plate body 11 includes a connection end 10 in the second direction Z. The tab structure 2 includes a plurality of tabs 21, and the plurality of tabs 21 are in one-to-one correspondence with the plurality of electrode plate bodies 11. In a state that the tab structure 2 is not bent, the tabs 21 are connected to the connection end 10 of the corresponding electrode plate body 11 and extend in the second direction Z. That is, in this embodiment, one tab 21 is provided on one electrode plate body 11. By increasing the number of the tabs 21 in the electrode assembly 1000, the internal resistance of the battery is reduced, the current density is balanced, the temperature during operation of the battery is reduced, and the battery performance is improved. The plurality of tabs 21 are naturally stacked during winding of the electrode assembly 1000, so as not to affect the production pace of the production line.

Among them, the sizes of at least two adjacent tabs 21 are different.

By providing the tabs 21 of different sizes in the tab structure 2, the plurality of tabs 21 with different sizes are stacked together, so that it is convenient to clamp them together by using a fixture in the related arts, and it is ensured that after the tab structure 2 is bent, the multiple layers of tabs 21 are welded together during ultrasonic welding, so that the ends of the bent tabs 21 away from the tab structure 2 are basically aligned with each other, and the welding range among the tabs 21 is consistent, so as to avoid the risk of missing welding.

In some embodiments of the present disclosure, in the two adjacent tabs 21, the orthographic projection of one tab 21 in the first direction Y completely falls on the other tab 21, that is, such a configuration can increase the welding area between the two adjacent tabs 21, thereby improving the uniformity of the internal resistance of the battery.

In some embodiments of the present disclosure, the tab structure includes a welding surface 5 located in the first direction Y, the welding surface 5 is configured to be welded to the output electrode, i.e., the welding surface 5 is welded directly to the pole on the cover plate assembly or indirectly to the pole through a connecting plate.

Among them, the size of the tab 21 close to the welding surface 5 is larger than the size of the tab 21 away from the welding surface 5. In this embodiment, in the process step of putting the electrode assembly 1000 into a housing after welding the plurality of tabs 21 to the cover plate assembly of the battery, it is necessary to adjust the positional relationship between the electrode assembly 1000 and the cover plate assembly, that is, the plurality of tabs 21 may be bent. Since the plurality of tabs 21 have different sizes, the size of the one or more tabs 21 close to the welding surface 5 is greater than the size of the one or more tabs 21 away from the welding surface 5, the risk of tearing or reversely inserting the tabs 21 when the plurality of tabs 21 are bent can be reduced.

In some embodiments of the present disclosure, in the first direction Y, sizes of the plurality of tabs 21 in the second direction Z decrease successively. Since the electrode plate structure 1 includes a welding surface 5 in the first direction Y, in this embodiment, sizes of the plurality of tabs 21 decrease successively in the direction away from the welding surface 5.

The sizes of the plurality of tabs 21 decrease successively in the second direction Z, that is, the sizes of the plurality of tabs 21 are different. By disposing tabs 21 of different sizes in the tab structure 2, the plurality of tabs 21 with different sizes are stacked together, so that it is convenient to clamp them together by using a fixture in the related arts, and it is ensured that after the tab structure 2 is bent, the multiple layers of tabs 21 are welded together during ultrasonic welding, so as to avoid the risk of missing welding, and at the same time, avoid the risk of tearing or reversely inserting the tabs 21 when the plurality of tabs 21 are bent.

In addition, since the size of the plurality of tabs 21 in the first direction Y decreases successively, it is also possible to reduce the safety risk of short circuit caused by insertion of the tabs 21 into the electrode plate structure 1 or the overlap of the tabs 21 with the cover plate assembly of the battery after the battery assembly is completed due to excessive size of some of the tabs 21.

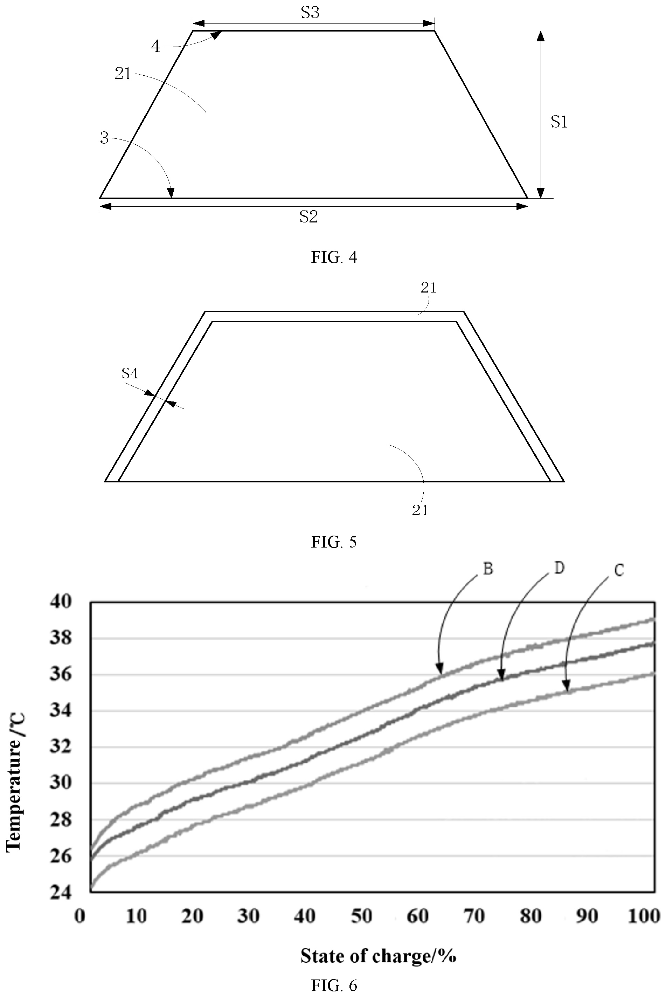

Referring to FIG. 4, in some embodiments of the present disclosure, the length of the tab 21 in the second direction Z is S1, in which 15 mm≤S1≤23 mm. That is, in this embodiment, S1 falls within an interval range as follows: 15 mm≤S1≤23 mm, so as to ensure that the plurality of tabs 21 in the tab structure 2 can all be welded together and that all the welding ranges among the plurality of tabs 21 are consistent. If S1 is less than 15 mm, there may be a risk of incomplete welding among the plurality of tabs 21, and if S1 is greater than 23 mm, there may be a safety risk of short circuit caused by insertion of the tabs 21 into the electrode plate structure 1 or the overlap of the tabs 21 with the cover plate assembly of the battery due to excessive size of some of the tabs 21.

The value of S1 may be 15 mm, 15.2 mm, 15.4 mm, 15.6 mm, 15.8 mm, 16 mm, 16.2 mm, 16.4 mm, 16.6 mm, 16.8 mm, 17 mm, 17.2 mm, 17.4 mm, 17.6 mm, 17.8 mm, 18 mm, 18.2 mm, 18.4 mm, 18.6 mm, 18.8 mm, 19 mm, 19.2 mm, 19.4 mm, 19.6 mm, 19.8 mm, 20 mm, 20.2 mm, 20.4 mm, 20.6 mm, 20.8 mm, 21 mm, 21.2 mm, 21.4 mm, 21.6 mm, 21.8 mm, 22 mm, 22.2 mm, 22.4 mm, 22.6 mm, 22.8 mm, 23 mm. The value of S1 is not limited to the listed values, and other values not listed within this range are also applicable.

In some embodiments of the present disclosure, the tabs 21 are arranged in a trapezoidal shape, that is, the tabs 21 are arranged in a trapezoidal shape, so that the weight of the tab structure 2 and the space occupied by the tab structure 2 can be reduced without affecting the mutual welding of the tabs 21, thereby improving the energy density of the electrode assembly 1000.

In some embodiments of the present disclosure, a tab 21 includes a first side 3 and a second side 4 disposed opposite each other in a second direction Z, and the first side 3 is located at the junction of the tab 21 and the electrode plate body 11. The length of the first side 3 in the third direction Y is defined as S2, the length of the second side 4 in the third direction Y is defined as S3, and the ranges of S2 and S3 are as follows: 41 mm≤S2≤47 mm and 34 mm≤S3≤40 mm. That is, in this embodiment, the values of S2 and S3 fall within the interval range as follows: 41 mm≤S2≤47 mm, 34 mm≤S3≤40 mm, so as to ensure that the plurality of tabs 21 in the tab structure 2 can be completely welded, and that the welding ranges among the plurality of tabs 21 are complete and consistent. Meanwhile, the situation that the welding area among the plurality of tabs 21 is too small to increase the internal resistance of the electrode assembly 1000 can be avoided. If S2 is less than 41 mm or S3 is less than 34 mm, there may be a risk that the welding area among the plurality of tabs 21 is too small, resulting in an increase in the internal resistance of the electrode assembly 1000. If S2 is greater than 47 mm or S3 is greater than 40 mm, there may be a safety risk of short circuit caused by the overlap among the tabs 21 and the cover plate assembly of the battery.

The values of S2 and S3 match each other to ensure that the tabs 21 can be arranged in a trapezoidal shape.

The value of S2 may be 41 mm, 41.2 mm, 41.4 mm, 41.6 mm, 41.8 mm, 42 mm, 42.2 mm, 42.4 mm, 42.6 mm, 42.8 mm, 43 mm, 43.2 mm, 43.4 mm, 43.6 mm, 43.8 mm, 44 mm, 44.2 mm, 44.4 mm, 44.6 mm, 44.8 mm, 45 mm, 45.2 mm, 45.4 mm, 45.6 mm, 45.8 mm, 46 mm, 46.2 mm, 46.4 mm, 46.6 mm, 46.8 mm, 47 mm. The value of S2 is not limited to the listed values, and other values not listed within this range are also applicable.

The value of S3 may be 34 mm, 34.2 mm, 34.4 mm, 34.6 mm, 34.8 mm, 35 mm, 35.2 mm, 35.4 mm, 35.6 mm, 35.8 mm, 36 mm, 36.2 mm, 36.4 mm, 36.6 mm, 36.8 mm, 37 mm, 37.2 mm, 37.4 mm, 37.6 mm, 37.8 mm, 38 mm, 38.2 mm, 38.4 mm, 38.6 mm, 38.8 mm, 39 mm, 39.2 mm, 39.4 mm, 39.6 mm, 39.8 mm, 40 mm. The value of S3 is not limited to the listed values, and other values not listed within this range are also applicable.

Referring to FIG. 5, in some embodiments of the present disclosure, in two adjacent tabs 21, the shortest distance between the projection of the periphery of one tab 21 on the welding surface 5 and the projection of the periphery of the other tab 21 on the welding surface 5 is S4, in which 0 mm<S4≤2 mm. The orthogonal projection of the tab structure 2 in the first direction Y is in a trapezoidal shape. In this embodiment, S4 is designed to fall within an interval range as follows: 0 mm<S4≤2 mm, so that the height of the orthogonal projection in the first direction Y of the tab structure 2 disposed in a trapezoidal shape in the first direction Y is kept between 15 mm and 23 mm, the length of the upper bottom of the trapezoid in the third direction Y is kept between 34 mm and 40 mm, and the length of the lower bottom of the trapezoid in the third direction Y is kept between 41 mm and 47 mm. If S4 is larger than 2 mm, the overall size of the tab structure 2 will be too large, which will result in a safety risk of short circuit caused by insertion of the tabs 21 into the electrode plate structure 1 or the overlap of the tabs 21 with the cover plate assembly of the battery.

In addition, in one embodiment of the present disclosure, the value of S4 may also be zero, that is, there are at least two tabs 21 have the same size, but on this basis, it is necessary to ensure that the size of the tabs 21 adjacent to the welding surface 5 is greater than the size of the tabs 21 away from the welding surface 5, and that the size of the tab structure 2 in the second direction Z is in a progressively decreasing state, so that it is convenient to clamp the plurality of tabs 21 together by using a fixture in the related arts, and it is ensured that after the tab structure 2 is bent, the multiple layers of tabs 21 are welded together during ultrasonic welding, so that the ends of the bent tabs 21 away from the tab structure 2 are basically aligned with each other, and the welding range among the tabs is consistent, so as to avoid the risk of missing welding.

Based on the electrode assembly 1000 in the above embodiments, the present disclosure also provides a battery including at least one electrode assembly 1000 and a cover plate assembly. The cover plate assembly is connected to the tab structure 2 of the electrode assembly 1000. The electrode assembly 1000 is as described in the above embodiment. Since the battery adopts all the technical solutions of all the above embodiments, it has at least the beneficial effects brought by the technical solutions of the above embodiments, which will not be described one by one here again.

In some embodiments of the present disclosure, the number of electrode assemblies 1000 is set to two, and the two electrode assemblies 1000 are arranged in a first direction Y. The welding surfaces 5 of the two tab structures 2 are respectively connected to the cover plate assembly, so as to reduce the risk of tearing the tabs 21 when the tab structures 2 are bent and to avoid the risk of missing welding among the plurality of tabs 21.

It can be understood that the sizes of the tabs 21 close to the welding surface 5 are greater than the sizes of the tabs 21 away from the welding surface 5. In this embodiment, in the process step of putting the electrode assembly 1000 into a housing after welding the plurality of tabs 21 to the cover plate assembly of the battery, it is necessary to adjust the positional relationship between the electrode assembly 1000 and the cover plate assembly, that is, the plurality of tabs 21 may be bent. Since the plurality of tabs 21 have different sizes, the size of the one or more tabs 21 close to the welding surface 5 is greater than the size of the one or more tabs 21 away from the welding surface 5, the risk of tearing the tabs 21 when the plurality of tabs 21 are bent can be reduced.

In addition, the plurality of tabs 21 with different sizes are stacked together, so that it is convenient to clamp them together by using a fixture in the related arts, and it is ensured that after the tab structure 2 is bent, the multiple layers of tabs 21 are welded together during ultrasonic welding, so that the ends of the bent tabs 21 away from the tab structure 2 are basically aligned with each other, and the welding range among the tabs is consistent, so as to avoid the risk of missing welding.

The battery in the related arts is a lithium iron phosphate battery, and the electrode assembly 1000 is the jelly roll. The number of windings is 25 for a positive electrode plate and the number of windings is 26 for a negative electrode plate, in which there are 26 layers of negative electrode plates and 25 layers of positive electrode plates. In this case, the number of positive tabs is 25 and the number of negative tabs is 25 respectively in a jelly roll. On this basis, the battery is charged and discharged at a current of its nominal capacity. At this time, the maximum temperature of the pole is 39 °C and the temperature of the large surface of the battery is 42 °C.

In an embodiment of the present disclosure, the battery in the related arts is a lithium iron phosphate battery, and the electrode assembly 1000 is the jelly roll. In a case that the number of winding is 25 for a positive electrode plate and the number of windings is 26 for a negative electrode plate, there are 50 positive tabs and 52 negative tabs in a jelly roll. At this time, the maximum temperature of the pole is 36 °C and the temperature of the large surface of the battery is 40 °C.

In addition, if the number of positive tabs is between 25 and 50 and the number of negative tabs is between 26 and 52, for example, the number of positive tabs is 38 and the number of negative tabs is 40, the maximum temperature of the pole is between 40 °C and 42 °C.

Referring to FIGs. 6 to 9, the reference sign B refers to a battery with 25 positive tabs and 26 negative tabs in the electrode assembly 1000; reference sign C refers to a battery with 50 positive tabs and 52 negative tabs in the electrode assembly 1000; and reference sign D refers to a battery with 38 positive tabs and 40 negative tabs in the electrode assembly 1000.

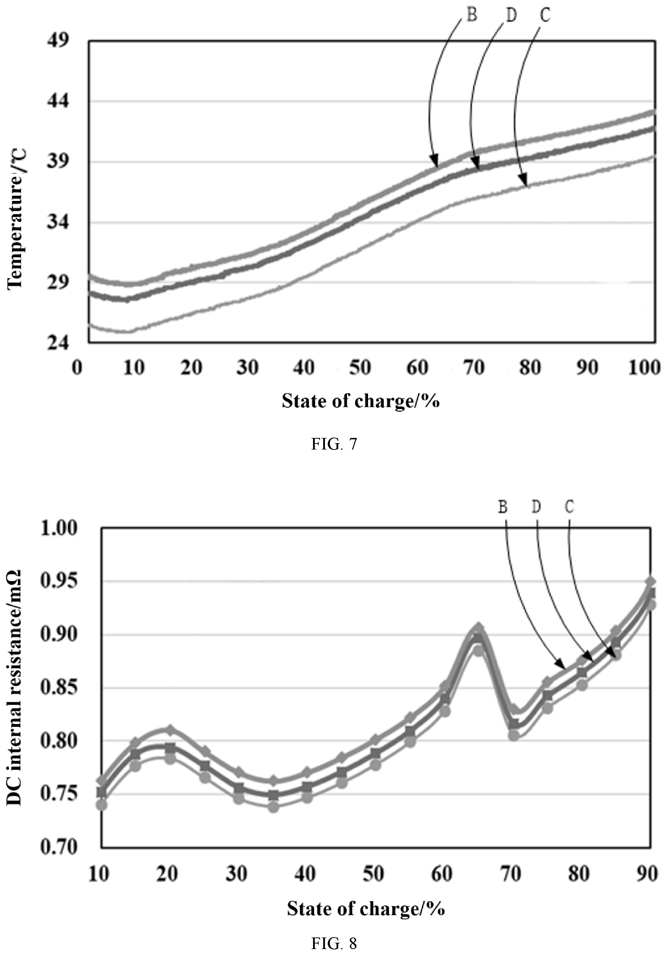

Referring to FIG. 6 to FIG. 7, FIG. 6 is a graph showing temperature change of a pole when batteries B, C, and D are charged at a current of a nominal capacity; and FIG. 7 is a graph showing temperature change of a pole when batteries B, C, and D are discharged at a current of a nominal capacity.

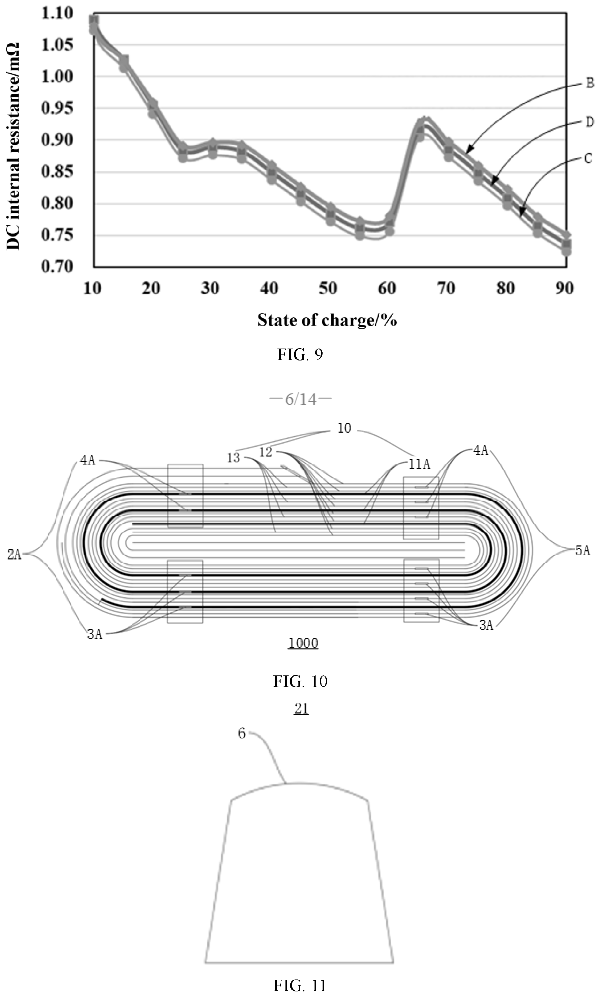

Referring to FIGs. 8 to 9, FIGs. 8 to 9 show the relationship between direct current resistance (DCR) state of charge (SOC) of batteries B, C and D; in which FIG. 8 is a graph showing change of DC internal resistance of a battery during charging, and FIG. 9 is a graph showing change of DC internal resistance of a battery during discharging.

In summary, it can be seen from FIGs. 6 to 7 that the more the number of tabs in the battery, the lower the internal resistance of the battery. The lower the internal resistance of the battery means that the voltage drop inside the battery is small and the loss is low, thus the energy efficiency of charging and discharging is higher. When the internal resistance of the battery is lower, both the internal ohmic resistance and the polarization resistance of the battery will be reduced, which will result in a reduction in the heat generated by the battery during operation. That is, the temperature rise of the batteries proposed in the embodiments of the present disclosure during use is lower than the temperature rise of the batteries in the related arts, thereby effectively reducing the heat generated by the batteries in the working process.

As can be seen from FIGs. 8 to 9, during charging, the internal resistance of the battery increases with the increase of state of charge; while during discharge, the DC internal resistance of the lithium-ion batteries increases with the decrease of state of charge. However, during the charging and discharging process, the DC internal resistance of the batteries provided in the present disclosure is less than that of the batteries in the related arts. Therefore, the DC internal resistance of the battery provided in the present disclosure is lower, thereby effectively reducing the heat generated by the batteries during operation.

Referring to FIGs. 10 to 15, FIGs. 10 to 15 are other embodiments of the electrode assembly 1000 provided in the present disclosure.

Referring to FIGs. 10 to 13, in some embodiments of the present disclosure, the electrode plate structure 1 includes a winding body 10. The winding body 10 includes a positive electrode plate 11A, a separator 12, and a negative electrode plate 13, which are sequentially stacked and wound.

A plurality of tabs 21 are disposed at the axial ends of the winding body 10, and the plurality of tabs 21 are respectively connected to different winding layers of the same electrode plate and are disposed in alignment with each other in a direction parallel to the axial ends. The axial direction of the winding body 10 is the height direction of the tabs 21, and the height of the plurality of tabs 21 gradually decreases in the alignment direction of the plurality of tabs 21.

It can be understood that the cross-section of the winding body 10 may be circular, elliptical, or a combination of straight lines and arcs.

The plurality of tabs 21 can be combined to form a tab group, that is, the tab group is disposed at the axial end of the winding body 10.

The plurality of tabs 21 in the tab group are respectively connected to different layers of the same electrode plate, that is, the tabs 21 in the tab group are tabs 21 of the same polarity.

In the present disclosure, the tab group may be a positive tab group 2A or a negative tab group 5A.

The tabs 21 in the positive tab group 2A are positive tabs and are connected to the positive electrode plate 11A.

The tabs 21 in the negative tab group 5A are negative tabs and are connected to the negative electrode plate 13.

The positive tab group 2A and the negative tab group 5A are tab groups with two polarities that are independent of each other, and their alignment directions and heights are independent of each other.

The height of the tab 21 refers to its size in the axial direction of the winding body 10. The width of the tab 21 refers to its size in the winding direction of the winding body 10.

The plurality of tabs 21 in the tab group are arranged in alignment with each other, which means that the plurality of tabs 21 are coplanar along a central axis in the height direction. For example, the heights of the plurality of tabs 21 gradually decrease, and may be gradually decreased by a fixed value, or may be gradually decreased by a non-fixed value, or may be gradually decreased by two adjacent tabs, or may be gradually decreased by groups. For example, in a direction in which the plurality of tabs 21 are aligned, the first 10% of the tabs 21 extend outwardly from the axial end of the winding body 10 to the same height; the first 10% to 30% of the tabs 21 extend outwardly from the axial end of the winding body 10 to the same height, and the height is less than that of the first 10% of the tabs 21; the first 30% to 50% of the tabs 21 extend outwardly from the axial end of the winding body 10 to the same height, and the height is less than that of the first 10% to 30% of the tabs 21; the 50% to 80% of the tabs 21 extend outwardly from the axial end of the winding body 10 to the same height, and the height is less than that of the first 10% to 30% of the tabs 21; and the 80% to 100% of the tabs 21 extend outwardly from the axial end of the winding body 10 to the same height, and the height is less than that of the 50% to 80% of the tabs 21.

In some embodiments of the present disclosure, the tab structure 2 includes a tab group, and the tab group includes a plurality of tabs 21. The tab group includes a first tab group 3A and a second tab group 4A, the first tab group 3A and the second tab group 4A are located at the same axial end of the winding body 10, the first tab group 3A and the second tab group 4A are respectively disposed on both sides of the winding axis of the winding body 10 and are aligned with each other.

It can be understood that the first tab group 3A and the second tab group 4A are arranged in alignment with each other, which means that the center axis along the height direction of the tabs in the first tab group 3A and the center axis along the height direction of the tabs in the second tab group 4A are coplanar.

In some embodiments of the present disclosure, the number of tabs in the first tab group 3A is the same as the number of winding layers of the tabs, and the direction in which the plurality of tabs 21 are aligned is from the second tab group 4A to the first tab group 3A.

It can be understood that the number of tabs 21 in the second tab group 4A may be adjusted as needed, thereby adjusting the current flow area of the tabs 21 to adapt to the requirements of batteries at different rates.

In some embodiments of the present disclosure, the winding direction of the winding body 10 is the width direction of the tabs 21, and the widths of the tabs 21 gradually decrease along the alignment direction of the tabs 21.

It can be understood that the widths of the tabs 21 extending in the winding direction of the winding body 10 gradually decreases, and can be gradually reduced by a fixed value, or can be gradually reduced by a non-fixed value, can be gradually reduced by two adjacent ones, or can be gradually reduced by groups. For example, along the alignment direction of the tabs 21, the first 10% of the tabs 21 has the same width along the winding direction of the winding body 10; the first 10% to 30% of the tabs 21 has the same width along the winding direction of the winding body 10, and the width is less than that of the first 10% of the tabs 21; the first 30% to 50% of the tabs 21 has the same width along the winding direction of the winding body 10, and the width is less than that of first 10% to 30% of the tabs 21; the 50% to 80% of the tabs 21 has the same width along the winding direction of the winding body 10, and the width is less than that of first 30% to 50% of the tabs 21; and the 80% to 100% of the tabs 21 has the same width along the winding direction of the winding body 10, and the width is less than that of 50% to 80% of the tabs 21.

In some embodiments of the present disclosure, the widths of the plurality of tabs 21 gradually decrease in a direction away from the winding body 10.

It can be understood that the shape of the tabs 21 may be trapezoidal, and that the inclination of the two legs of the trapezoid may be set as required. In some embodiments of the present disclosure, the shape of the tabs is isosceles trapezoid.

Referring to FIG. 11, in some embodiments of the present disclosure, the side of the tab 21 away from the electrode plate is an arc 6. It can be understood that the radian of the arc 6 may be set as required.

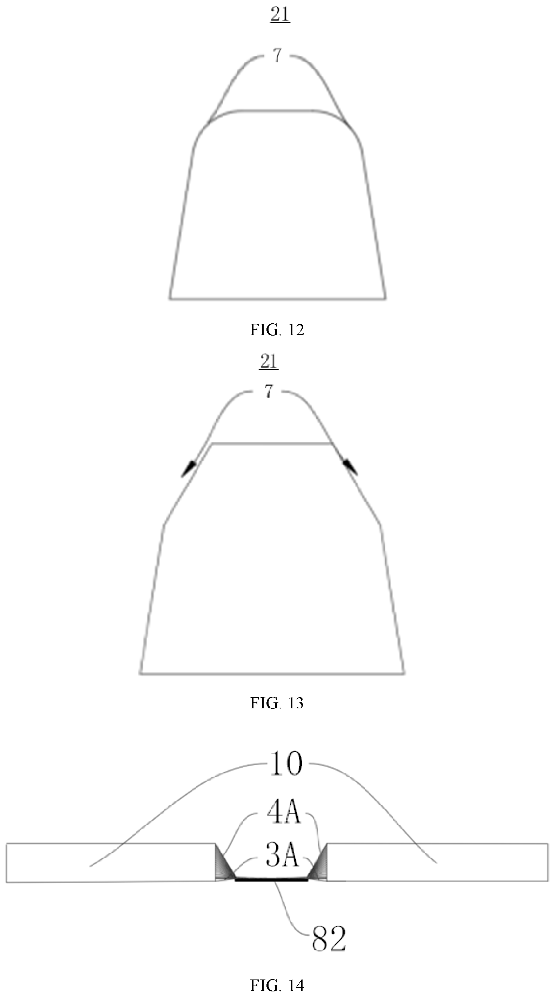

Referring to FIGs. 12 to 13, in some embodiments of the present disclosure, chamfers 7 are provided at both ends of one side of the tabs 21 away from the electrode plate.

It can be understood that the chamfer 7 may be a rounded corner or a triangular notch, and the size and shape of the triangular notch may be set as required.

In an embodiment, the tab group is a first-polarity tab group. The electrode assembly 1000 further includes a second-polarity tab group. The second-polarity tab group and the first-polarity tab group are respectively disposed at both ends of the same axial end of the winding body 10. One of the first-polarity tab group and the second-polarity tab group is a positive tab group 2A, and the other is a negative tab group 5A.

In some embodiments of the present disclosure, the first-polarity tab group is a positive tab group 2A, the second-polarity tab group is a negative tab group 5A. The negative tab group 5A includes a plurality of negative tabs, the plurality of negative tabs are respectively connected to different winding layers of the negative tabs and are arranged in alignment with each other, and the heights of the plurality of negative tabs gradually decrease in the direction in the alignment direction of the plurality of negative tabs.

It can be understood that the tab group in the present disclosure is the positive tab group 2A. The tabs in the positive tab group 2A are the positive tabs, which are connected to the positive electrode plate 11A. The tabs in the negative tab group 5A are negative tabs, which are connected to the negative electrode plate 13. The characteristics such as height, width and structure of the negative tabs in the negative tab group 5A may also satisfy that of the tabs 21 in the tab group (please refer to the previous description of the tab group for details). In order to make the description concise, details are not described herein.

Based on the electrode assembly 1000 in the above embodiments, please refer to FIGs. 10 to 15, embodiments of the present disclosure further provide a battery, which includes:

a connecting plate 8; and
the above-mentioned electrode assembly, the ends of the tabs in the tab group away from the electrode plate are overlapped and welded to the same side of the connecting plate 8.

It can be understood that the tab group may be a positive tab group 2A or a negative tab group 5A. Accordingly, the connecting plate 8 may be a positive electrode connecting plate 81 or a negative electrode connecting plate 82. The positive tabs in the positive tab group 2A are welded to the positive electrode connecting plate 81, and the negative tabs in the negative tab group 5A are welded to the negative electrode connecting plate 82. The positive tab group 2A includes a plurality of positive tabs. When welding, the ends of the plurality of positive tabs away from the positive electrode plate 11A are overlapped together first, and then welded to the same surface of the positive electrode connecting plate 81, so as to avoid missing welding. The negative tab group 5A includes a plurality of negative tabs. When welding, the ends of the plurality of the plurality of negative tabs away from the negative electrode plate 13 are overlapped together first, and then welded to the same surface of the negative electrode connecting plate 82, so as to avoid missing welding.

In some embodiments of the present disclosure, the battery includes at least two electrode assemblies 1000. In the at least two electrode assemblies 1000, the tab groups in the two adjacent electrode assemblies 1000 are arranged in alignment with each other. The connecting plates 8 are welded to the tab groups in the two adjacent electrode assemblies 1000.

In some embodiments of the present disclosure, the connecting plate 8 is a U-shaped connecting plate, which includes a first extension portion and a second extension portion which are opposite to each other. The first extension portion is welded to a tab group in one of the two adjacent electrode assemblies 1000. The second extension portion is welded to a tab group of the other one of the two adjacent electrode assemblies 1000.

In some embodiments of the present disclosure, the tab group includes a first tab group 3A and a second tab group 4A. The first tab group 3A of two adjacent electrode assemblies 1000 are disposed adjacent to each other.

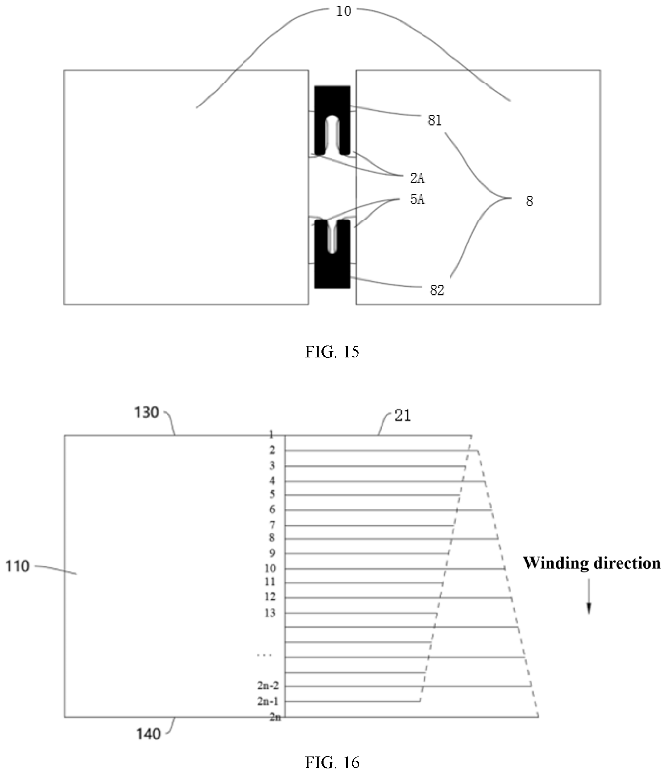

Referring to FIGs. 16 to 25, which show the electrode assembly 1000 provided in other embodiments.

As shown in FIGs. 16 to 19, an embodiment of the present disclosure provides an electrode assembly 1000, in which the electrode plate structure 1 includes a main body portion 110 and tabs 21. The main body portion 110 is configured to be wound to form a jelly roll 20. The main body portion 110 has a winding starting end 130 and a winding terminating end 140. The direction from the winding starting end 130 to the winding terminating end 140 is defined as the winding direction. At least two tabs 21 are provided, and they are disposed at intervals on one side of the main body portion 110 along the winding direction. Along the winding direction, the heights of the tabs 21 in the odd-numbered locations have an opposite gradient trend to heights of the tabs 21 in the even-numbered locations.

In the embodiments of the present disclosure, the jelly roll 20 is formed by winding the main body portion 110, so that the heights of the at least two tabs 21 meet the requirement that the heights of the tabs 21 in the odd-numbered locations have an opposite gradient trend to heights of the tabs 21 in the even-numbered locations in the winding direction, in this way, the height of each tab 21 is slightly different. When all the tabs 21 are bent and welded to the connecting plate 8, the integrity of the welding mark can be ensured, and the phenomenon that the tabs 21 are torn due to interference can be avoided.

Here, the heights of the tabs 21 in the odd-numbered locations have an opposite gradient trend to heights of the tabs 21 in the even-numbered locations in the winding direction includes situations as follows: the heights of the tabs 21 in the odd-numbered locations decrease progressively and the heights of the tabs 21 located in the even-numbered locations increase progressively; or, the heights of the tabs 21 in the odd-numbered locations increase progressively, and the heights of the tabs 21 in the even-numbered locations decrease progressively.

The heights of the tabs 21 in the odd-numbered locations decrease progressively, and the height of the tabs 21 located in the even-numbered locations increase progressively means that for the tabs 21 in different odd-numbered locations, the height of each tab 21 in the odd-numbered location decreases progressively, and for the tabs 21 in different even-numbered locations, the height of each tab 21 in the even-numbered location increases progressively. Alternatively, the heights of the tabs 21 in the odd-numbered locations increase progressively, and the heights of the tabs 21 in an even-numbered locations decrease progressively means that for the tabs 21 in different odd-numbered locations, the height of each tab 21 in the odd-numbered location increases progressively, and for the tabs 21 in different even-numbered locations, the height of each tab 21 in the even-numbered location decreases progressively. In this way, it is possible to ensure that all the tabs 21 do not interfere after bending, and that the integrity of the welding mark is ensured.

The height of a tab 21 is the distance between the end of the tab 21 away from the main body portion 110 and the end of the tab 21 close to the main body portion 110.

In some embodiments of the present disclosure, the number of the tabs 21 may be 2n, where n≥1, and n is an integer. 2n of tabs 21 are defined as follows: 1-st tab, 2-nd tab, 3-rd tab,..., 2n-th tab. The 1-st tab is disposed close to the winding starting end 130, and the 2-nd is disposed close to the winding terminating end 140. Since the winding direction is from the winding starting end 130 to the winding terminating end 140, the 1-st tab is located in the central area of the jelly roll 20 and the 2-nd tab is located in the edge area of the jelly roll 20.

As shown in FIG. 16, in some embodiments of the present disclosure, the heights of the tabs 21 in the odd-numbered locations decrease progressively, and the heights of the tabs 21 in the even-numbered locations increase progressively, in which the height of the 1-st tab is less than the height of the 2-nd tab.

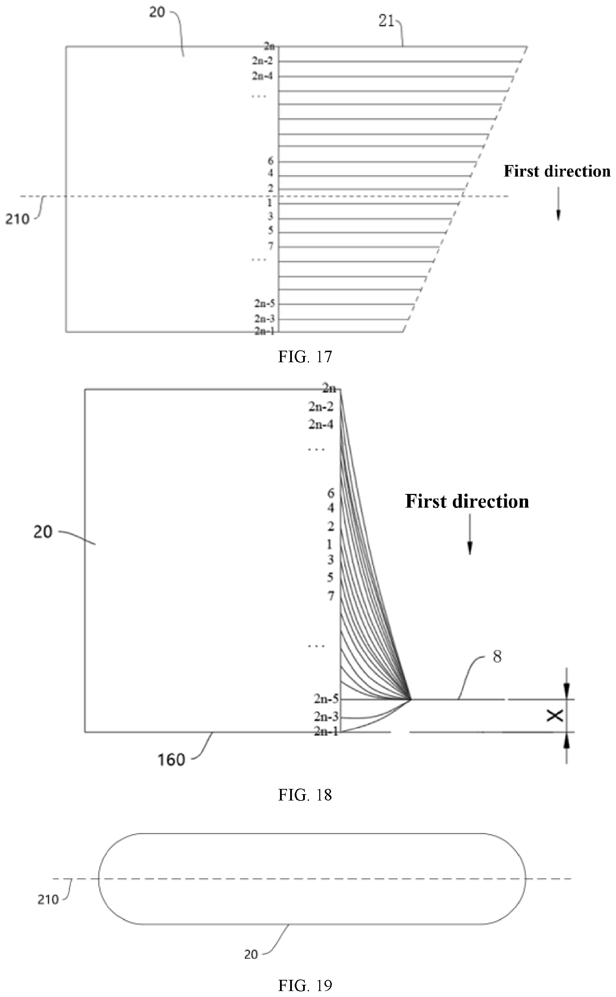

It can be understood that based on the above height change law, as shown in FIG. 17, when the electrode assembly 1000 is wound into the jelly roll 20, the height of the tabs 21 can be sequentially increased or sequentially decreased. When all the tabs 21 are bent and welded to the connecting plate 8, the integrity of the welding mark can be ensured, and the phenomenon that the tabs 21 are torn due to interference can be avoided.

In some embodiments of the present disclosure, the electrode assembly 1000 has a wound state. The wound state corresponds to a winding center surface 210. In the wound state, the tabs 21 in the odd-numbered locations and the tabs 21 in the even-numbered locations are respectively located on opposite sides of the winding center surface 210, and the projections of all the tabs 21 in the first direction at least partially overlap. Here, the first direction is disposed at an angle to the winding center surface 210.

It can be understood that the electrode assembly 1000 may form the jelly roll 20 in a wound state. The formed jelly roll 20 is in an axisymmetric structure. The winding center surface 210 passes through the symmetry axis of the jelly roll 20 and is the symmetry plane of the jelly roll 20. As shown in FIG. 19, when the jelly roll 20 is provided as a runway-shaped jelly roll, the winding center surface 210 is parallel to the length direction of the jelly roll 20, and the winding center surface 210 is located at the middle of the jelly roll 20 in the width direction. In this way, the jelly roll 20 can be divided into an upper area and a lower area by the winding center surface 210. As shown in FIG. 17, the tabs 21 in the odd-numbered locations are allowed to be located in the lower are, and the tabs 21 in the even-numbered locations are allowed to be located in the upper area. At this time, the heights of the tabs 21 in the odd-numbered locations decrease, and the height of the tabs 21 in the even-numbered locations increase. Alternatively, the tabs 21 in the odd-numbered locations are allowed to be located in the upper are and the tabs 21 in the even-numbered locations are allowed to be located in the lower area. At this time, the height of the tabs 21 in the odd-numbered locations increase, and the height of the tabs 21 in the even-numbered locations decrease.

Here, the projections of all the tabs 21 in the first direction at least partially overlap, so that all the tabs 21 can be welded to the same connecting plate 8 after being bent along the first direction. With the gradual winding of the electrode assembly 1000, the size of the formed jelly roll 20 is gradually increased. In order to ensure that the projections of all the tabs 21 in the first direction at least partially overlap, the spacing between the two adjacent tabs 21 may be gradually increased.

In some embodiments of the present disclosure, the projections of all the tabs 21 in the first direction completely overlap.

Based on the fact that the tabs 21 are disposed on both opposite sides of the winding center surface 210, the jelly roll 20 can be formed in a dual-tab structure. In the related arts, the jelly roll 20 leads out the tabs 21 only on one side of the winding center surface 210, and a single-tab structure is formed. The dual-tab structure in the embodiment of the present disclosure is completely folded and welded to a connecting plate 8. Compared with the single-tab structure; the number of tabs 21 can be doubled, the current flow area of the tabs 21 is increased, and the internal resistance and temperature rise of the battery are reduced. At the same time, combined with the height change law of tabs 21 in the odd-numbered locations and the tabs 21 in the even-numbered locations, the integrity of the welding mark of the battery with a dual-tab structure can be ensured, and the phenomenon that the tabs 21 are torn due to interference can be avoided.

For example, in a case that the tabs 21 in the odd-numbered locations are located in the lower area, the tabs 21 in the even-numbered locations are located in the upper area, and the heights of the tabs 21 in the odd-numbered locations decrease, and the height of the tabs 21 in the even-numbered locations increase, the height of the tab 21 in the uppermost layer is the longest, and the height of the tab 21 in the lowermost layer is the shortest. When all the tabs 21 are bent, it is possible, on the one hand, to ensure that the tab 21 in the uppermost layer has enough area for ultrasonic welding to ensure the integrity of the welding mark; on the other hand, to prevent the tab 21 in the lowermost layer from being too long to cause interference of bending and/or welding.

As shown in FIGs. 17 and 19, the first direction is perpendicular to the winding center surface 210. Alternatively, the first direction may be set at an acute or obtuse angle with the winding center surface 210. The first direction may be the thickness direction of the jelly roll 20.

The electrode assembly 1000 may be wound to form a cylindrical jelly roll, a square jelly roll, and a runway-shaped jelly roll.

In some embodiments of the present disclosure, the electrode assembly 1000 is wound into a runway-shaped jelly roll.

In some embodiments of the present disclosure, in the wound state, all the tabs 21 are bent toward the connecting plate 8 and welded to the connecting plate 8. When the tabs 21 are in the bent state, the distance between the free end of the shortest tab 21 and the free end of the longest tab 21 is Y, where 0 mm $\leq$ Y $\leq$ 1 mm.

It can be understood that, when the tabs 21 are in the bent state, the distance between the free end of the shortest tab 21 and the free end of the longest tab 21 is within a range of less than or equal to 1 mm, which can ensure the integrity of the welding mark, and avoid the phenomenon that the tabs 21 are torn due to interference.

It should be noted that, after all the tabs 21 are bent, the free end of the shortest tab 21 can be made to extend beyond the free end of the longest tab 21. At this time, the free end of the shortest tab 21 is further away from the main body portion 110. Alternatively, the free end of the longest tab 21 may extend beyond the free end of the shortest tab 21, in this case, the free end of the longest tab 21 may be further away from the main body portion 110.

For example, the distance Y between the free end of the shortest tab 21 and the free end of the longest tab 21 is set to 0.2 mm, 0.5 mm, 0.8 mm, 1 mm, or any value between any two of them.

In some embodiments of the present disclosure, when the tabs 21 are in a bent state, the free ends of all the tabs 21 are flush.

It can be understood that the free ends of all the tabs 21 are flush when the tabs 21 are in a bent state, so that all the tabs 21 can be aligned with the connecting plate 8, which on the one hand improves the aesthetics and on the other hand improves the welding quality.

Here, the connecting plate 8 is generally close to one side of the tab 21 with a shorter height.

As shown in FIG. 18, in some embodiments of the present disclosure, along the first direction, the main body portion 110 has a proximal end 160 close to the connecting plate 8. The spacing between the proximal end 160 and the connecting plate 8 is X, where 1 mm $\leq$ X $\leq$ 3 mm.

It can be understood that, based on the selection of the position of the connecting plate 8, it is possible to ensure that the free ends of all the tabs 21 are flush after the tabs 21 are bent. If the distance X between the proximal end 160 and the connecting plate 8 is less than 1 mm, the welding mark may be incomplete due to the insufficient length of the uppermost tab 21. If the distance X between the proximal end 160 and the connecting plate 8 is greater than 3 mm, the lowermost I tab 21 may not be welded to the connecting plate 8.

For example, the spacing X between the proximal end 160 and the connecting plate 8 may be set to 1 mm, 2 mm, or 3 mm, or any value between any two of them.

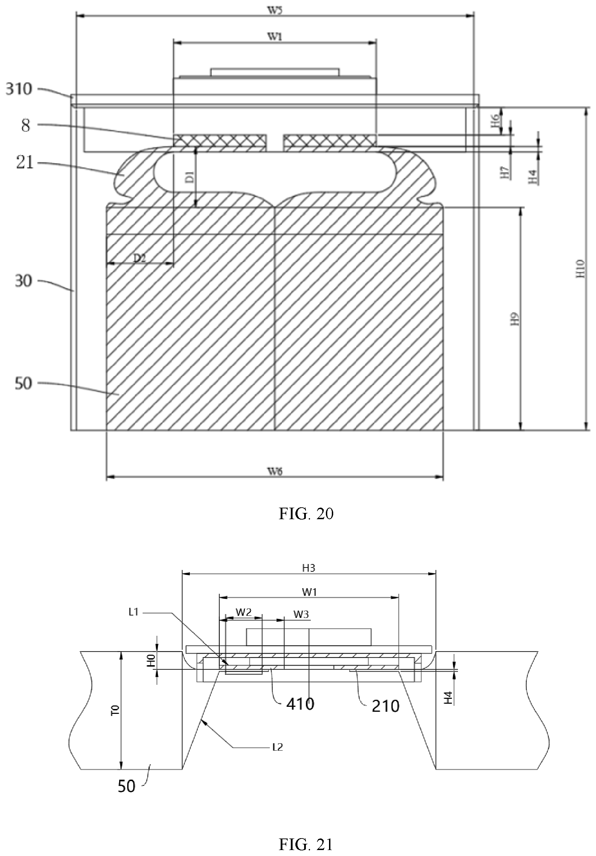

Based on the electrode assemblies 1000 in the above embodiments, as shown in FIGs. 20 to 22, embodiments of the present disclosure provide a battery. The battery further includes a housing 30, a core pack 50, and a cover plate assembly, the cover plate assembly includes a connecting plate 8. The connecting plate 8 includes a positive electrode connecting plate and a negative electrode connecting plate. The positive electrode connecting plate has a positive tab connecting portion. The negative electrode connecting plate has a negative tab connecting portion. The core pack 50 is disposed in the housing 30. The core pack 50 includes a jelly roll 20. The jelly roll 20 includes a main body portion and a separator. The main body portion includes a positive electrode plate and a negative electrode plate, and the main body portion 110 is as described in the above-mentioned embodiments. The positive tabs of the positive electrode plate are bent and welded to the positive electrode connecting plate. The negative tabs of the negative electrode plate are all bent and welded to the negative tab connecting portion.

In the embodiments of the present disclosure, the jelly roll 20 is formed by winding the main body portion 110, so that the heights of at least two tabs 21 meet the requirement that the heights of the tabs 21 in the odd-numbered locations have an opposite gradient trend to heights of the tabs 21 in the even-numbered locations in the winding direction, in this way, the height of each tab 21 is slightly different. When all the tabs 21 are bent and welded to the connecting plate 8, the integrity of the welding mark can be ensured, and the phenomenon that the tabs 21 are torn due to interference can be avoided.

Two core packs 50 may be provided in each housing 30, and the two core packs 50 may form a core pack pair. The two core packs 50 are directly arranged in the housing 30 after being packed. Alternatively, each housing 30 may be provided with at least two core packs pairs, in this case, every two corresponding core packs 50 may be packed to form a core pack pair, and then disposed in the housing 30, respectively.

In some embodiments of the present disclosure, one core pair is disposed in the housing 30. For the same core pack pair, the two core packs 50 are folded in the direction close to each other to complete packing of the core packs. That is, the tabs 21 of the two jelly rolls 20 are bent in the direction close to each other.

The connecting plate 8, as a current collector, is welded to all the corresponding tabs 21. Specifically, the connecting plate 8 includes a positive electrode connecting plate and a negative electrode connecting plate. The positive tab connecting portion of the positive electrode connecting plate is used for welding the positive tab, and the negative tab connecting portion of the negative electrode connecting plate is used for welding the negative tab. The positive electrode connecting plate and the negative electrode connecting plate may be welded to the same housing cover 310 to achieve electrical connection therewith. The tabs 21 are usually welded to the connecting plate 8 by ultrasonic welding.

In some embodiments of the present disclosure, the positive tab connecting portion of the positive electrode connecting plate includes two spaced connecting tabs 410. The positive tabs of the positive electrode plate are all bent and welded to the connecting tabs 410.

In some embodiments of the present disclosure, the structure of the positive electrode connecting plate is the same as that of the negative electrode connecting plate.

As shown in FIGs. 16 to 18, in some embodiments of the present disclosure, the number of positive tabs is set to 2n. The height of the positive tab at position (2n-1) is minimum. The height of the positive tab at position 2n is the largest. Further, the height of the positive tab as the first position is less than the height of the positive tab at the second position. Here, n$\geq$1, and n is an integer.

It can be understood that, based on the fact that the number of the tabs 21 is even, the height of the positive tabs at position (2n-1) is minimum, the height of the positive tab at position 2n is the largest, and the height of the positive tab as the first position is less than the height of the positive tab at the second position, when the positive electrode plate is wound into a jelly roll 20, the height of the positive tabs can be successively increased or successively decreased. When all the positive tabs are bent and welded to the positive electrode connecting plate, the integrity of the welding mark can be ensured, and the phenomenon that the tabs are torn due to interference can be avoided.

Here, the heights of the positive tabs may vary in an equal gradient, that is, the heights of all the positive tabs are distributed in a manner of equal difference. The tolerance of change in the heights of the positive tabs can be calculated based on the height difference of the positive tabs at position (2n-1) and the positive tabs at position 2n, combining with the number of all the positive tabs, so as to calculate the heights of all the positive tabs.

In some embodiments of the present disclosure, the height of the positive tab at position 2n is positively correlated to the sum of lengths the root of the separator-negative tab and the root of the separator-positive tab, the length of the positive tab welding area, and the length of the positive tab bending area.

It can be understood that the height of the positive tab at position 2n increases with the increase of the sum of lengths the root of the separator-negative tab and the root of the separator-positive tab, the length of the positive tab welding area, and the length of the positive tab bending area, and decreases with the decrease of the sum of lengths the root of the separator-negative tab and the root of the separator-positive tab, the length of the positive tab welding area, and the length of the positive tab bending area. The positive correlation relationship may be a linear relationship, an exponential relationship, or the like.

Based on the design of the above three parameters, the maximum height of the positive tab can be directly calculated, which is convenient for the processing and molding of the positive tabs.

In some embodiments of the present disclosure, the height of the positive tab at position 2n is a. The sum of lengths of the root of the separator-negative tab and the root of the separator-positive tab is O. The length of the positive tab welding area is L1. The length of the positive tab bending area is L2. Here, a, O, L1 and L2 satisfy a formula as follows: a=L1+L2+O.

It can be understood that the height of the positive tab at position 2n is linearly related to the sum of lengths the root of the separator-negative tab and the root of the separator-positive tab, the length of the positive tab welding area, and the length of the positive tab bending area. Based on the above relationship, the height of the positive tab at position 2n can be quickly calculated.

Here, the length of root of the separator-negative tab is O1, and the length of root of the separator-positive tab is O2. Here, O, O1 and O2 satisfy a formula as follows: O=O1+O2. The length of root of the separator-negative tab and the length of root of the separator-positive tab are design parameters of the batteries, and the length of root of the separator-negative tab and the length of root of the separator-positive tab can be directly obtained based on type of batteries, thereby obtaining the sum of lengths the root of the separator-negative tab and the root of the separator-positive tab.

In some embodiments of the present disclosure, the length of the positive tab welding area is positively correlated to the width of the welding mark and the width of the connecting tab 410.

It can be understood that the length of the positive tab welding area increases with the increase of width of the welding mark and width of the connecting tab 410, and decreases with the decrease of width of the welding mark and width of the connecting tab 410. The positive correlation relationship may be a linear relationship, an exponential relationship, or the like.

In some embodiments of the present disclosure, the positive tabs are configured to be welded to the connecting tabs 410 through at least two rounds of welding processes. The width of the welding mark formed on the positive tabs by the last welding process is W2. The width of the connecting tabs 410 is W3. Here, k1, L1, W2 and W3 satisfy a formula as follows: L1=0.5(W2+W3)+k1, where k1 is a first pre-set margin.

It can be understood that there are a large number of positive tabs, at least two rounds of welding processes are needed to weld all the tabs 21 to the corresponding connecting tabs 410. The last round of welding process may form a welding mark with a width of W2 on the uppermost positive tab. The length of the positive tab welding area is calculated by combining the width of the welding mark with the width of the connecting tab 410.

Here, the width of the welding mark and the width of the connecting tab 410 are design parameters of the battery. Based on the type of the battery, the width of the welding mark and the width of the connecting tab 410 can be directly obtained, thereby obtaining the length of the positive tab welding area.

In some embodiments of the present disclosure, 1≤k1≤2. For example, the first pre-set margin k1 is set to 1, 1.5, 2, or any value between any two of them.

In some embodiments of the present disclosure, the positive tabs are welded to the corresponding connecting tabs 410 after being raised by the welding base. Here, the length of the positive tab bending area is positively correlated to the spacing between the two core packs 50 before stacking and the thickness of a single core pack 50, and is negatively correlated to the width of the positive electrode connecting plate, the height raised by the welding base, and the total thickness of all the positive tabs welded to the same connecting tab 410.

It can be understood that, in order to facilitate welding of the positive tabs, after the height of the positive tabs are raised by the welding base, the positive tabs are bent in the direction towards the connecting tabs 410 and are ultrasonically welded. Based on the above relationship, the length of the positive tab bending area increases with the increase of the spacing between the two core packs 50 before stacking and the thickness of a single core pack 50, decreases with the decrease of the spacing between the two core packs 50 and the thickness of a single core pack 50, decreases with the increase of the width of the positive connecting plate, the height raised by the welding base, and the total thickness of all the positive tabs welded to the same connecting tab 410, and increases with the decrease of the width of the positive connecting plate, the height raised by the welding base, and the total thickness of all the positive tabs welded to the same connecting tab 410. The positive correlation relationship and the negative correlation relationship may be a linear relationship, an exponential relationship, or the like.

In some embodiments of the present disclosure, the spacing between the two core packs 50 before stacking is H3. The thickness of a single core pack 50 is T0. The width of the positive electrode connecting plate is W1. The height raised by the welding base is H0. The total thickness of all positive tabs welded to the same connecting tab 410 is H4. Here, L2, H3, W1, T0, H0, and H4 satisfy a formula as follows:

$$L2 = \sqrt{(0.5H3 - 0.5W1)^2 + (T0 - H0 - H4)^2}.$$

It can be understood that after all the positive tabs are bent so that the free ends are aligned and welded to the positive connecting plate, the positive tab bending area is usually an inclined surface. As shown in FIG. 20, before the core pack 50 is assembled on the housing 30, one end of the positive tab bending area is connected to the core pack 50, and the other end is connected to the positive connecting plate, so that the inclined surface, the surface of the core pack 50, and the connecting line from the positive connecting plate to the core pack 50 are enclosed to form a right triangle. The length of one of the right-angled sides can be obtained by using the difference between the spacing between the core packs 50 before stacking and the width of the positive connecting plate, and the length of the other right-angled side can be obtained by using the difference between the thickness of a single core pack 50 and the height raised by the welding base and the total thickness of all the positive tabs welded to the same connecting tab 410. Thus, the length of the inclined surface is obtained, thereby reflecting the length of the positive tab bending area.

Here, the thickness of a single core pack 50, the width of the positive connecting plate, and the height raised by the welding base are all design parameters. The thickness of a single core pack 50, the width of the positive electrode connecting plate, and the height raised by the welding base can be directly obtained based on the type of the batteries, combining with the spacing between the two core packs 50 before stacking, the length of the positive tab bending area can be obtained.

In some embodiments of the present disclosure, the height of the positive tab at position (2n-1) is positively correlated to the sum of lengths the root of the separator-negative tab and the root of the separator-positive tab, the spacing between the two core packs 50 before stacking, the width of the welding mark, and the width of the connecting tab 410, and is negatively correlated to the width of the positive electrode connecting plate.

It can be understood that the height of the positive tab at position (2n-1) increases with the increase of the sum of lengths the root of the separator-negative tab and the root of the separator-positive tab, the spacing between the two core packs 50 before stacking, the width of the welding mark, and the width of the connecting tab 410, decreases with the decrease of the sum of lengths the root of the separator-negative tab and the root of the separator-positive tab, the spacing between two core packs 50 before stacking, the width of the welding mark, and the width of the connecting tab 410, decreases with the increase of the width of the positive electrode connecting plate, and increases with the decrease of the width of the positive electrode connecting plate. The positive correlation relationship and the negative correlation relationship may be a linear relationship, an exponential relationship, or the like.

Based on the design of the above four parameters, the minimum height of the positive tab can be directly calculated, which is convenient for the processing and molding of the positive tabs.

As shown in FIGs. 20 and 21, in some embodiments of the present disclosure, the height of the positive tab at position (2n-1) is b. The spacing between two core packs 50 before stacking is H3. The width of the positive electrode connecting plate is W1. The width of the welding mark is W2. The width of the connecting tab 410 is W3. The sum of lengths the root of the separator-negative tab and the root of the separator-positive tab is O. Here, b, H3, W1, W2, W3, O, and k2 satisfy a formula as follows: b=0.5(H3-W1)+0.5(W2+W3)+O+k2, where k2 is a second pre-set margin.

It can be understood that the height of the positive tab at position (2n-1) is linearly related to the sum of lengths the root of the separator-negative tab and the root of the separator-positive tab, the spacing between two core packs 50 before stacking, the width of the welding mark, the width of the connecting tab 410, and the width of the positive electrode connecting plate. Based on the above relationship, the height of the positive tab at position (2n-1) can be quickly calculated.

The sum of lengths the root of the separator-negative tab and the root of the separator-positive tab, the width of the welding mark, the width of the connecting tab 410, and the width of the positive electrode connecting plate are all design parameters of batteries. The sum of lengths of root of the separator-negative tab and the root of the separator-positive tab can be directly obtained based on type of batteries, the width of the welding mark, the width of the connecting tab 410, and the width of the positive electrode connecting plate, thereby obtaining the height of the positive tab at position (2n-1).

In some embodiments of the present disclosure, $1 \leq k2 \leq 2$. For example, the second pre-set margin k2 is set to 1, 1.5, 2, or any value between any two of them.

In some embodiments of the present disclosure, the spacing between two core packs 50 before stacking is positively correlated to the spacing between the positive electrode connecting plate and the main body portion 110 and the spacing between the edge of the positive electrode connecting plate and the inner side wall of the housing 30.

It can be understood that the spacing between two core packs 50 before stacking increases with the increase of the spacing between the positive electrode connecting plate and the main body portion 110 and the spacing between the edge of the positive electrode connecting plate and the inner side wall of the housing 30, and decreases with the decrease of the spacing between the positive electrode connecting plate and the main body portion 110 and the spacing between the edge of the positive electrode connecting plate and the inner side wall of the housing 30. Here, the positive correlation may be a linear relationship or an exponential relationship.

In some embodiments of the present disclosure, the spacing between two core packs 50 before stacking is H3. The spacing between the positive electrode connecting plate and the main body portion 110 is D1. The spacing between the edge of the positive electrode connecting plate and the inner side wall of the housing 30 is D2. Here, H3, D1, D2, and W1 satisfy a formula as follows:

$$H3 = 2\sqrt{D1^2 + D2^2} + W1 .$$

It can be understood that the spacing between two core packs 50 before stacking can be directly obtained based on the design parameters of batteries according to the above formula. After the spacing between two core packs 50 before stacking is obtained, the maximum height and the minimum height of the positive tab can be obtained according to the above formula.

Here, the spacing between the positive electrode connecting plate and the main body portion 110 refers to the spacing between the positive electrode connecting plate and the main body portion 110 when the core packs 50 are in a state of stacking. The spacing between the edge of the positive electrode connecting plate and the inner side wall of the housing 30 refers to the spacing between the end of the positive electrode connecting plate close to the inner side wall of the housing 30 and the inner side wall of the housing 30 when the core packs 50 are in a state of stacking and installed on the housing 30.

In some embodiments of the present disclosure, the housing 30 is connected to a housing cover 310. Here, the spacing between the positive electrode connecting plate and the main body portion 110 is positively related to the height of the housing 30 and the compression amount of the separator, and is negatively related to the spacing between the positive electrode connecting plate and the housing cover 310, the thickness of the positive electrode connecting plate, the total thickness of all positive tabs welded to the same connecting tab 410, and the spacing between the separator and the lower surface of the housing 30.

It can be understood that the spacing between the positive electrode connecting plate and the main body portion 110 increases with the increase of the height of the housing 30 and the compression amount of the separator, decreases with the decrease of the height of the housing 30 and the compression amount of the separator, decreases with the increase of the spacing between the positive electrode connecting plate and the housing cover 310, the thickness of the positive electrode connecting plate, the total thickness of all positive tabs welded to the same connecting tab 410, and the spacing between the separator and the lower surface of the housing 30, and increases with the decrease of the spacing between the positive electrode connecting plate and the housing cover 310, the thickness of the positive electrode connecting plate, the total thickness of all positive tabs welded to the same connecting tab 410, and the spacing between the separator and the lower surface of the housing 30.

In some embodiments of the present disclosure, the height of the housing 30 is H10. The compression amount of the separator is k3. The spacing between the positive electrode connecting plate and the housing cover 310 is H6. The thickness of the positive electrode connecting plate is H7. The total thickness of all positive tabs welded to the same connecting tab 410 is H4. The spacing between the separator and the lower surface of the housing 30 is H9. Here, D1, H10, k3, H6, H7, H4 and H9 satisfy a formula as follows: D1=H10-H6-H7-H4-(H9-k3).

Here, the height of the housing 30, the compression amount of the separator, the spacing between the positive electrode connecting plate and the housing cover 310, the thickness of the positive electrode connecting plate, the total thickness of all positive tabs welded to the same connecting tab 410, and the spacing between the separator and the lower surface of the housing 30 are all design parameters. The height of the housing 30, the compression amount of the separator, the spacing between the positive electrode connecting plate and the housing cover 310, the thickness of the positive electrode connecting plate, the total thickness of all positive tabs welded to the same connecting tab 410, and the spacing between the separator and the lower surface of the housing 30 can be directly obtained based on the type of batteries, so that the spacing between the positive electrode connecting plate and the main body portion 110 can be calculated based on the above formula.

In some embodiments of the present disclosure, the compression amount of the separator falls within a range as follows: $1.5 \leq k3 \leq 2.5$.

For example, the compression amount k3 of the separator may be set to 1.5, 2, 2.5, or any value between two of them. The value of the compression amount k3 of the separator can be selected based on production experience in combination with the battery model.

In some embodiments of the present disclosure, the total thickness of two core packs 50 is W6. The width of the housing 30 is W5. Here, D2, W6 W5, and W1 satisfy a formula as follows: 0.5(W6-W1)≤D2≤0.5(W5-W1).

It can be understood that, after two core packs 50 are stacked and assembled in the housing 30, if the edge of the core pack 50 is attached to the inner surface of the housing 30, the spacing between the edge of the positive electrode connecting plate and the inner side wall of the housing 30 is exactly equal to half the difference between the total thickness of two core packs 50 and the width of the positive electrode connecting plate. If the edge of the core pack 50 is spaced apart from the inner surface of the housing 30, the spacing between the edge of the positive electrode connecting plate and the inner side wall of the housing 30 may be equal to half the difference between the width of the housing 30 and the width of the positive electrode connecting plate. Therefore, the range of the spacing between the edge of the positive electrode connecting plate and the inner side wall of the housing 30 can be defined based on this relationship, and any value within this range can be selected.

In some embodiments of the present disclosure, the spacing between the positive electrode connecting plate and the main body portion 110 has a maximum value and a minimum value, which are D1max and D1min, respectively. The spacing between the edge of the positive electrode connecting plate and the inner side wall of the housing 30 has a maximum value and a minimum value, which are D2max and D2min, respectively. Here, D1max=H10-H6-H7-H4-(H9-2.5), D1min=H10-H6-H7-H4-(H9-1.5), D2max=0.5(W5-W1), and D2min=0.5(W6-W1), where D1max, D1min, D2max, D2min, H3, and W1 satisfy a formula as follows:

$$2\sqrt{D1_{max}^2 + D2_{max}^2} + W1 \leqslant H3 \leqslant 2\sqrt{D1_{min}^2 + D2_{min}^2} + W1$$ .

It can be understood that, both the value of the compression amount k3 of the separator and the range of the spacing between the edge of the positive electrode connecting plate and the inner side wall of the housing 30 affect the spacing between two core packs 50 before stacking. Therefore, it is possible to calculate the range of the spacing between two core packs 50 before stacking, and a reasonable value can be selected within this range to ensure that two core packs 50 meet the requirements of stacking. Further, it is possible to enable the stacked core packs 50 to be assembled in the housing 30 and to be removed from the housing 30.

In this case, H3 cannot be equal to the minimum value calculated by using D1min and D2min, so as to prevent the situation that the core packs 50 can't be taken out because it is completely attached to the inner surface of the housing 30.

In some embodiments of the present disclosure, the number of negative tabs is set to (2n+2). The height of the negative tab at position (2n+1) is minimum. The height of the negative tab at position (2n+2) is maximum. The height of the negative tab at position 1 is less than that of the negative tab at position 2. Further, the height of the negative tab at position (2n+2) is the same as that of the positive tab at position 2n.

It can be understood that by making each of the negative tabs satisfies the above-mentioned relationship, after the negative tabs are wound into the jelly roll 20, the height of the negative tabs can be sequentially increased or sequentially decreased. When all the negative tabs are bent and welded to the negative electrode connecting plate, the integrity of the welding mark can be ensured, and the phenomenon that the tabs are torn due to interference can be avoided. The number of the negative tabs is two more than the number of the positive tabs, so that the height of the negative tabs at position (2n+2) is the same as the height of the positive tabs at position 2n. In this case, there is no need to calculate the maximum height of the negative tabs repeatedly, which is convenient for rapid manufacturing of the negative tabs.

In some embodiments of the present disclosure, the height of the tab at position (2n+1) is allowed to be equal to the height of the tab at position (2n-1). At this time, the minimum height calculated among the positive tabs can be directly used as the minimum height of the negative tab. Based on the minimum height of the negative tab, the maximum height, and the number of the negative tabs, the tolerance of change in the heights can be calculated, and then the lengths of all the negative tabs are calculated based on the tolerance.

In some embodiments of the present disclosure, the height of the tab at position (2n-1) is allowed to be made equal to the height of the tab at position (2n-1). At this time, the minimum height calculated among the positive tabs can be directly used as the height of the negative tab at position (2n-1). Based on the height of the tab at position (2n-1), the maximum height of the negative tab, and the number of the negative tabs, the tolerance of change in the heights can be calculated, and then the lengths of all the negative tabs are calculated based on the tolerance.

Based on the batteries in the above embodiments, embodiments of the present disclosure provide a battery pack including a battery as previously described.

In the embodiment of the present disclosure, the jelly roll 20 is formed by winding the main body portion 110, so that the heights of the at least two tabs 21 in the winding direction satisfy relationship as follow: the heights of the tabs 21 in the odd-numbered locations have an opposite gradient trend to heights of the tabs 21 in the even-numbered locations, so that the height of each tab 21 is slightly different. When all the tabs 21 are bent and welded to the connecting plate 8, the integrity of the welding mark can be ensured, and the phenomenon that the tabs 21 are torn due to interference can be avoided.

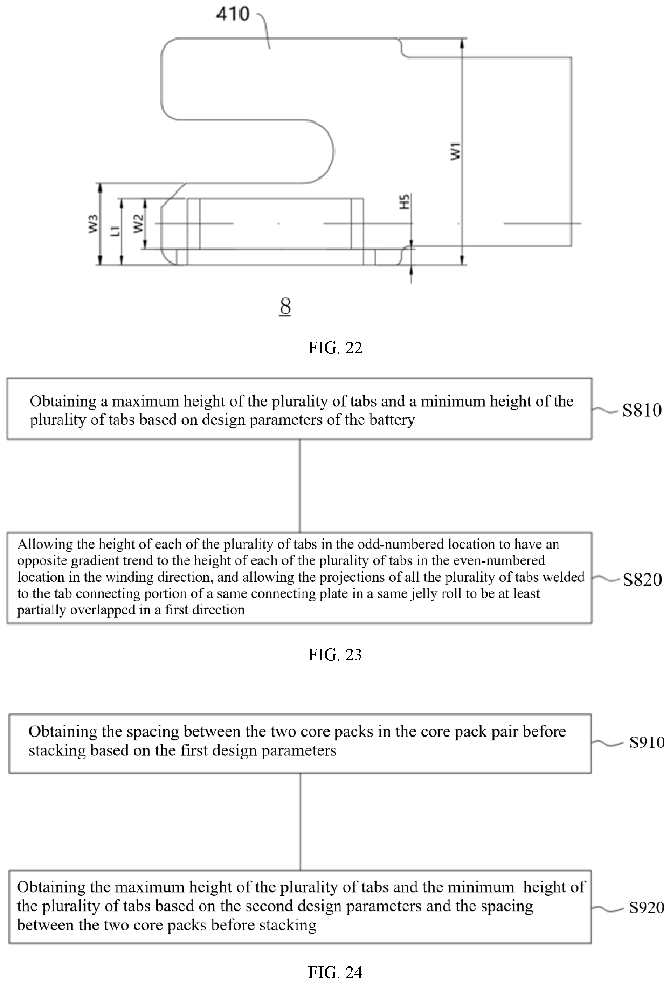

As shown in FIG. 23, embodiments of the present disclosure provide a method of designing an electrode assembly 1000, which is applied to batteries, the method includes:

S810. obtaining a maximum height of a tab and a minimum height of a tab based on the design parameters of a battery;

S820. allowing heights of the tabs 21 in odd-numbered locations have an opposite gradient trend to heights of the tabs 21 in even-numbered locations in a winding direction, and allowing projections of all the tabs 21 welded to the tab connecting portion of a same connecting plate 8 in a same jelly roll 20 are at least partially overlapped in a first direction.

Based on the above height change law, when the electrode assembly 1000 is wound into the jelly roll 20, the height of the tabs 21 can be sequentially increased or sequentially decreased. When all the tabs 21 are bent and welded to the connecting plate 8, the integrity of the welding mark can be ensured, and the phenomenon that the tabs 21 are torn due to interference can be avoided.

The electrode assembly 1000 may form the jelly roll 20 in a wound state. The formed jelly roll 20 is in an axisymmetric structure. The winding center surface 210 passes through the symmetry axis of the jelly roll 20. In this way, the jelly roll 20 can be divided into an upper area and a lower area by the winding center surface 210. As shown in FIG. 17, the tabs 21 in the odd-numbered locations are allowed to be located in the lower are, and the tabs 21 in the even-numbered locations are allowed to be located in the upper area. At this time, the heights of the tabs 21 in the odd-numbered locations decrease, and the height of the tabs 21 in the even-numbered locations increase. Alternatively, the tabs 21 in the odd-numbered locations are allowed to be located in the upper are and the tabs 21 in the even-numbered locations are allowed to be located in the lower area. At this time, the height of the tabs 21 in the odd-numbered locations increase, and the height of the tabs 21 in the even-numbered locations decrease.

Further, the projections of all the tabs 21 welded to the tab connecting portion of the same connecting plate 8 in the same jelly roll 20 are allowed to be at least partially overlapped in the first direction, so that all the tabs 21 can be welded to the same connecting plate 8 after being bent in the first direction. With the gradual winding of the electrode assembly 1000, the size of the formed jelly roll 20 is gradually increased. In order to ensure that the projections of all the tabs 21 in the first direction at least partially overlap, the spacing between the two adjacent tabs 21 may be gradually increased.

In some embodiments of the present disclosure, the projections of all the tabs 21 welded to the tab connecting portion of the same connecting plate 8 are completely overlapped in the first direction.

Based on the fact that the tabs 21 are disposed on both opposite sides of the winding center surface 210, the jelly roll 20 can be formed in a dual-tab structure. In the related arts, the jelly roll 20 leads out the tabs 21 only on one side of the winding center surface 210, and a single-tab structure is formed. The dual-tab structure in the embodiment of the present disclosure is completely folded and welded to a connecting plate 8. In this way; the number of tabs 21 can be doubled, the current flow area of the tabs 21 is increased, and the internal resistance and temperature rise of the battery are reduced. Combining with the height change law of tabs 21 in the odd-numbered locations and the tabs 21 in the even-numbered locations, the integrity of the welding mark of the battery with a dual-tab structure can be ensured, and the phenomenon that the tabs 21 are torn due to interference can be avoided.

Here, the heights of the tabs 21 in the odd-numbered locations have an opposite gradient trend to heights of the tabs 21 in the even-numbered locations in the winding direction includes situations as follows: the heights of the tabs 21 in the odd-numbered locations decrease progressively and the heights of the tabs 21 located in the even-numbered locations increase progressively; or, the heights of the tabs 21 in the odd-numbered locations increase progressively, and the heights of the tabs 21 in the even-numbered locations decrease progressively.

The heights of the tabs 21 in the odd-numbered locations decrease progressively, and the height of the tabs 21 located in the even-numbered locations increase progressively means that for the tabs 21 in different odd-numbered locations, the height of each tab 21 in the odd-numbered location decreases progressively, and for the tabs 21 in different even-numbered locations, the height of each tab 21 in the even-numbered location increases progressively. Alternatively, the heights of the tabs 21 in the odd-numbered locations increase progressively, and the heights of the tabs 21 in an even-numbered locations decrease progressively means that for the tabs 21 in different odd-numbered locations, the height of each tab 21 in the odd-numbered location increases progressively, and for the tabs 21 in different even-numbered locations, the height of each tab 21 in the even-numbered location decreases progressively. In this way, it is possible to ensure that all the tabs 21 do not interfere after bending, and that the integrity of the welding mark is ensured.

Here, the height of the tab 21 refers to the distance from one end of the tab 21 away from the main body portion 110 to the main body portion 110.

For example, in a case that the tabs 21 in the odd-numbered locations are located in the lower area, the tabs 21 in the even-numbered locations are located in the upper area, and the heights of the tabs 21 in the odd-numbered locations decrease, and the height of the tabs 21 in the even-numbered locations increase, the height of the tab 21 in the uppermost layer is the longest, and the height of the tab 21 in the lowermost layer is the shortest. When all the tabs 21 welded to the same connecting tab 410 are bent, it is possible, on the one hand, to ensure that the tab 21 in the uppermost layer has enough area for ultrasonic welding to ensure the integrity of the welding mark; on the other hand, to prevent the tab 21 in the lowermost layer from being too long to cause interference of bending and/or welding.

As shown in FIG. 24, in some embodiments of the present disclosure, the design parameters of the battery include first design parameters and second design parameters. At least two core packs 50 are provided, and two core packs 50 form a core pack pair. Based on the design parameters of batteries, the maximum height of the tab 21 and the minimum height of the tab 21 are obtained, which includes:

S910. obtaining the spacing between the two core packs 50 before stacking based on the first design parameters; and

S920. obtaining the maximum height of the tab 21 and the minimum height of the tab 21 based on the second design parameters and the spacing between the two core packs 50 before stacking.

It can be understood that the spacing between the two core packs 50 before stacking is calculated first by using the first design parameters of batteries, and then the maximum height of the tab 21 and the minimum height of the tab 21 are calculated by using the second design parameters and the spacing between the two core packs 50 before stacking.

In some embodiments of the present disclosure, the tab connecting portion includes two spaced connecting tabs 410, the tabs 21 are bent and welded to the connecting tabs 410. The first design parameters include: the height of the housing 30, the compression amount of the separator, the spacing between the connecting plate 8 and the housing cover 310, the thickness of the connecting plate 8, the total thickness of all the tabs 21 welded to the same connecting tab 410, the spacing between the separator and the lower surface of the housing 30, the total thickness of the two core packs 50, and the width of the housing 30.

It can be understood that the above parameters are all known constant values based on the battery model. Therefore, it is possible to quickly calculate the spacing between the two core packs 50 before stacking based on the above-mentioned parameters.

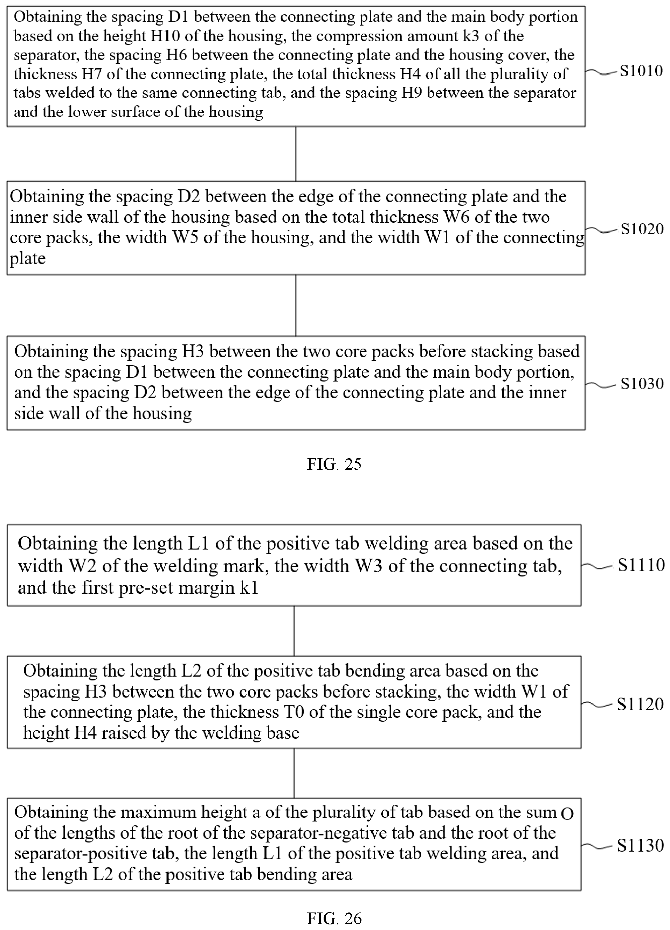

As shown in FIG. 25, in some embodiments of the present disclosure, the step of "obtaining the spacing between the two core packs 50 before stacking based on the first design parameters" includes:

S1010, obtaining the spacing D1 between the connecting plate 8 and the main body portion 110 based on the height H10 of the housing 30, the compression amount k3 of the separator, the spacing H6 between the connecting plate 8 and the housing cover 310, the thickness H7 of the connecting plate 8, the total thickness H4 of all the tabs 21 welded to the same connecting tab 410, and the spacing H9 between the separator and the lower surface of the housing 30, where D1, H10, k3, H6, H7, H4, and H9 satisfy a formula as follows:

$$D1 = H10 - H6 - H7 - H4 - (H9 - k3).$$

The height of the housing 30, the compression amount of the separator, the spacing between the connecting plate 8 and the housing cover 310, the thickness of the connecting plate 8, the total thickness of all the tabs 21 welded to the same connecting tab 410, and the spacing between the separator and the lower surface of the housing 30 can be directly obtained based on the battery model, so that the spacing between the connecting plate 8 and the main body portion 110 can be calculated based on the above formula.

In some embodiments of the present disclosure, the compression amount of the separator falls within a range as follows: $1.5 \leq k3 \leq 2.5$.

For example, the compression amount k3 of the separator may be set to 1.5, 2, 2.5, or any value between any two of them. The value of the compression amount k3 of the separator can be selected based on production experience in combination with the battery model.

S1020. obtaining the spacing D2 between the edge of the connecting plate 8 and the inner side wall of the housing 30 based on the total thickness W6 of the two core packs 50, the width W5 of the housing 30, and the width W1 of the connecting plate 8, where D2, W6, W5 and W1 satisfy a formula as follows:

$$0.5(W6 - W1) \leq D2 \leq 0.5(W5 - W1).$$

It can be understood that, after two core packs 50 are stacked and assembled in the housing 30, if the edge of the core pack 50 is attached to the inner surface of the housing 30, the spacing between the edge of the positive electrode connecting plate and the inner side wall of the housing 30 is exactly equal to half the difference between the total thickness of two core packs 50 and the width of the positive electrode connecting plate. If the edge of the core pack 50 is spaced apart from the inner surface of the housing 30, the spacing between the edge of the positive electrode connecting plate and the inner side wall of the housing 30 may be equal to half the difference between the width of the housing 30 and the width of the positive electrode connecting plate. Therefore, the range of the spacing between the edge of the positive electrode connecting plate and the inner side wall of the housing 30 can be defined based on this relationship, and any value within this range can be selected.

S1030. obtaining the spacing H3 between the two core packs 50 before stacking based on the spacing D1 between the connecting plate 8 and the main body portion 110, and the spacing D2 between the edge of the connecting plate 8 and the inner side wall of the housing 30, where H3, D1, D2, and W1 satisfy a formula as follows:

$$H3 = 2\sqrt{D1^2 + D2^2} + W1.$$

It can be understood that the spacing between two core packs 50 before stacking can be directly obtained based on the design parameters of batteries according to the above formula. After the spacing between two core packs 50 before stacking is obtained, the maximum height and the minimum height of the tabs 21 can be obtained according to the above formula.

Here, the spacing between the connecting plate 8 and the main body portion 110 refers to the spacing between the connecting plate 8 and the main body portion 110 when the core packs 50 are in a state of stacking. The spacing between the edge of the connecting plate 8 and the inner side wall of the housing 30 refers to the spacing between the end of the connecting plate 8 close to the inner side wall of the housing 30 and the inner side wall of the housing 30 when the core packs 50 are in a state of stacking and installed on the housing 30.

In some embodiments of the present disclosure, the spacing between the connecting plate 8 and the main body portion 110 has a maximum value and a minimum value, which are D1max and D1min, respectively. The spacing between the edge of the connecting plate 8 and the inner side wall of the housing 30 has a maximum value and a minimum value, which are D2max and D2min, respectively. Here, D1max=H10-H6-H7-H4-(H9-2.5), D1min=H10-H6-H7-H4-(H9-1.5), D2max=0.5(W5-W1), and D2min=0.5(W6-W1), where D1max, D1min, D2max, D2min, W1 and H3 satisfy a formula as follows:

$$2\sqrt{D1_{max}^2 + D2_{max}^2} + W1 \leqslant H3 \leqslant 2\sqrt{D1_{min}^2 + D2_{min}^2} + W1$$

It can be understood that both the value of the compression amount k3 of the separator and the range of the spacing between the edge of the connecting plate 8 and the inner side wall of the housing 30 affect the spacing between two core packs 50 before stacking. Therefore, it is possible to calculate the range of the spacing between two core packs 50 before stacking, and a reasonable value can be selected within this range to ensure that two core packs 50 meet the requirements of stacking. Further, it is possible to enable the stacked core packs 50 to be assembled in the housing 30 and to be removed from the housing 30.

In this case, H3 cannot be equal to the minimum value calculated by using D1min and D2min, so as to prevent the situation that the core packs 50 can't be taken out because it is completely attached to the inner surface of the housing 30.

In some embodiments of the present disclosure, the second design parameters include the sum of lengths of the root of the separator-negative tab and the root of the separator-positive tab, the width of the welding mark, the width of the connecting tab 410, the first pre-set margin, the second pre-set margin, the width of the connecting plate 8, the thickness of a single core pack 50, and the height raised by the welding base.

It can be understood that the above parameters are all known constant values based on the battery model. Therefore, it is possible to quickly calculate the maximum height of the tab 21 and the minimum height of the tab 21 based on the above parameters.

As shown in FIG. 26, in some embodiments of the present disclosure, the step of "obtaining the maximum height of the tab 21 and the minimum height of the tab 21 based on the second design parameters and the spacing between the two core packs before stacking" includes:

S1110. obtaining the length L1 of the positive tab welding area based on the width W2 of the welding mark, the width W3 of the connecting tab 410, and the first pre-set margin k1, where L1, W2, W3, and k1 satisfy a formula as follows:

$$L1=0.5(W2+W3)+k1.$$

Here, the width W2 of the welding mark is the width of the welding mark formed on the tabs 21 by the last round of welding process. It can be understood that there are a large number of tabs 21, at least two rounds of welding processes is needed to weld all the tabs 21 to the corresponding connecting tabs 410. The last round of welding process may form a welding mark with a width of W2 on the uppermost tab 21. The length of the positive tab welding area is calculated by combining the width of the welding mark with the width of the connecting tab 410.

In some embodiments of the present disclosure, $1 \leq k1 \leq 2$. For example, the first pre-set margin k1 is set to 1, 1.5, 2, or any value between any two of them.

S1120. obtaining the length L2 of the positive tab bending area based on the spacing H3 between the two core packs 50 before stacking, the width W1 of the connecting plate 8, the thickness T0 of a single core pack 50, and the height H4 raised by the welding base, here, L2, H3, W1, T0, H0, and H4 satisfy a formula as follows:

$$L2 = \sqrt{\left(0.5H3 - 0.5W1\right)^2 + \left(T0 - H0 - H4\right)^2}$$

It can be understood that after all the tabs 21 welded to the same connecting tab 410 are bent so that the free ends are aligned and welded to the connecting plate 8, the positive tab bending area is usually an inclined surface. As shown in FIG. 20, before the core pack 50 is assembled on the housing 30, one end of the positive tab bending area is connected to the core pack 50, and the other end is connected to the connecting plate 8, so that the inclined surface, the surface of the core pack 50, and the connecting line from the connecting plate 8 to the core pack 50 are enclosed to form a right triangle. The length of one of the right-angled sides can be obtained by using the difference between the spacing between the core packs 50 before stacking and the width of the connecting plate 8, and the length of the other right-angled side can be obtained by using the difference between the thickness of a single core pack 50 and the height raised by the welding base and the total thickness of all the tabs 21 welded to the same connecting tab 410. Thus, the length of the inclined surface is obtained, thereby reflecting the length of the positive tab bending area.

S1130. obtaining the maximum height a of the tab 21 based on the sum O of lengths of the root of the separator-negative tab and the root of the separator-positive tab, the length L1 of the positive tab welding area, and the length L2 of the positive tab bending area, where a, O, L1 and L2 satisfy a formula as follows:

$$a = L1 + L2 + O.$$

Here, the length of root of the separator-negative tab is O1, and the length of root of the separator-positive tab is O2. O1 and O2 satisfy a formula as follows: O=O1+O2. The length of root of the separator-negative tab and the length of root of the separator-positive tab are design parameters of the batteries, and the length of root of the separator-negative tab and the length of root of the separator-positive tab can be directly obtained based on type of batteries, thereby obtaining the sum of lengths the root of the separator-negative tab and the root of the separator-positive tab.

In some embodiments of the present disclosure, the step of "obtaining the maximum height of the tab 21 and the minimum height of the tab 21 based on the second design parameters and the spacing between the two core packs before stacking" further includes:

Obtaining the minimum height b of the tab 21 based on the sum O of lengths of the root of the separator-negative tab and the root of the separator-positive tab, the spacing H3 between the two core packs 50 before stacking, the width W1 of the connecting plate 8, the width W2 of the welding mark, the width W3 of the connecting tab 410, and the second pre-set margin k2, where b, H3, W1, W2, W3, O, and k2 satisfy a formula as follows:

$$b = 0.5(H3 - W1) + 0.5(W2 + W3) + O + k2.$$

It can be understood that the height of the positive tab at position (2n-1) is linearly related to the sum of lengths the root of the separator-negative tab and the root of the separator-positive tab, the spacing between two core packs 50 before stacking, the width of the welding mark, the width of the connecting tab 410, and the width of the connecting plate 8. Based on the above relationship, the height of the positive tab at position (2n-1) can be quickly calculated.

The sum of lengths the root of the separator-negative tab and the root of the separator-positive tab, the width of the welding mark, the width of the connecting tab 410, and the width of the connecting plate 8 are all design parameters of batteries. The sum of lengths of root of the separator-negative tab and the root of the separator-positive tab can be directly obtained based on type of batteries, the width of the welding mark, the width of the connecting tab 410, and the width of the connecting plate 8, thereby obtaining the height of the positive tab at position (2n-1).

In some embodiments of the present disclosure, $1 \leq k2 \leq 2$. For example, the second pre-set margin k2 is set to 1, 1.5, 2, or any value between any two of them.

In some embodiments of the present disclosure, the step of "allowing heights of the tabs 21 in odd-numbered locations to have an opposite gradient trend to heights of the tabs 21 in even-numbered locations in a winding direction, and allowing projections of all the tabs 21 welded to the tab connecting portion of the same connecting plate in the same jelly roll 20 to be at least partially overlapped in a first direction" includes:

allowing the heights of the tabs 21 in the odd-numbered locations to decrease progressively and the heights of the tabs 21 located in the even-numbered locations to increase progressively in the winding direction, and allowing projections of all the tabs 21 welded to the same connecting tab 410 in the same jelly roll 20 to be at least partially overlapped in a first direction.

It can be understood that based on the above height change law, when the electrode assembly 1000 is wound into the jelly roll 20, the height of the tabs 21 can be sequentially increased or sequentially decreased. When all the tabs 21 welded to the same connecting tab 410 are bent and welded to the connecting plate 8, the integrity of the welding mark can be ensured, and the phenomenon that the tabs 21 are torn due to interference can be avoided.

In some embodiments of the present disclosure, the step of "allowing the heights of the tabs 21 in the odd-numbered locations to decrease progressively and the heights of the tabs 21 located in the even-numbered locations to increase progressively in the winding direction, and allowing projections of all the tabs 21 welded to the same connecting tab 410 in the same jelly roll 20 to be at least partially overlapped in a first direction" include:

obtaining the tolerance of change in the heights of the tabs 21 based on the number of the tabs 21, the maximum height of the tab 21, and the minimum height of the tab 21; and

allowing the heights of the tabs 21 in the odd-numbered locations to be decreased by the value of tolerance and the heights of the tabs 21 in the even-numbered locations to be increased by the value of tolerance in the winding direction, and allowing the height of the tab 21 in the first location to be less than the height of the tab 21 in the second location, and allowing the projections of all the tabs 21 welded to the same connecting tab 410 in the same jelly roll 20 to be at least partially overlapped in the first direction.

It can be understood that, the tolerance of change in heights of the tabs 21 are calculated based on the maximum height of the tab 21 and the minimum height of the tab 21, combining with the number of tabs 21. Based on this tolerance, the height of all the tabs 21 can be calculated to facilitate the processing of the tabs 21.

## Claims

1. An electrode assembly (1000) comprising:

   an electrode plate structure (1); and
   at least one tab structure (2) comprising a plurality of tabs (21), the plurality of tabs (21) being disposed on one side of the electrode plate structure (1) and connected to the electrode plate structure (1);
   wherein at least two adjacent ones of the plurality of tabs (21) are different in size.

2. The electrode assembly (1000) according to claim 1, wherein the electrode plate structure (1) comprises a plurality of electrode plate bodies (11) stacked in a first direction, each of the plurality of electrode plate bodies (11) comprises a connection end (10) in a second direction intersecting with the first direction;

   each of the plurality of tabs (21) is connected to the connection end (10) of a corresponding one of the plurality of electrode plate bodies (11) and extends in the second direction; and
   wherein at least two adjacent ones of the plurality of tabs (21) are different in size.

3. The electrode assembly (1000) according to claim 2, wherein an orthographic projection of one of the two adjacent ones of the plurality of tabs (21) in the first direction completely falls on another one of the two adjacent ones of the plurality of tabs (21).

4. The electrode assembly (1000) according to claim 3, wherein the tab structure (2) comprises a welding surface (5) in the first direction, the welding surface (5) is configured to be welded to an output electrode; and
   wherein a size of one of the plurality of tabs (21) close to the welding surface (5) is greater than that of another one of the plurality of tabs (21) away from the welding surface (5).

5. The electrode assembly (1000) according to claim 4, wherein in the first direction, sizes of the plurality of the tabs (21) in the second direction successively decreases.

6. The electrode assembly (1000) according to claim 4, wherein a shortest distance between a projection of a periphery of one of the two adjacent ones of the plurality of tabs (21) on the welding surface (5) and a projection of a periphery of another one of the two adjacent ones of the plurality of tabs (21) on the welding surface (5) is defined as S4; wherein a range of S4 is as follows: 0 mm≤S4≤2 mm.

7. The electrode assembly (1000) according to any one of claims 1 to 5, wherein a length of one of plurality of tabs (21) in the second direction is defined as S1; wherein a range of S1 is as follows: 15 mm≤S1≤23 mm.

8. The electrode assembly (1000) according to any one of claims 1 to 5, wherein each of the plurality of tabs (21) is disposed in a trapezoidal shape.

9. The electrode assembly (1000) according to claim 8, wherein each of the plurality of tabs (21) comprises a first side (3) and a second side (4) disposed opposite each other in the second direction, the first side (3) is disposed at a junction of each of the plurality of tabs (21) and each of the plurality of electrode plate bodies (11);
a length of the first side (3) in a third direction is defined as S2, a length of the second side (4) in the third direction is defined as S3, the first direction and the second direction are perpendicular to the third direction respectively; wherein ranges of S2 and S3 are as follows: 41 mm≤S2≤47 mm, and 34 mm≤S3≤40 mm.

10. The electrode assembly (1000) according to claim 1, wherein

the electrode plate structure (1) comprises a winding body (10), the winding body (10) comprises a positive electrode plate (11A), a separator (12), and a negative electrode plate (13) that are stacked and wound sequentially; and
the plurality of tabs (21) are disposed at an axial end of the winding body (10), the plurality of tabs (21) are respectively connected to different winding layers of a same electrode plate and are disposed in alignment with each other, an axial direction of the winding body (10) is a height direction of the plurality of tabs (21), and heights of the plurality of tabs (21) gradually decreases in an alignment direction of the plurality of tabs (21).

11. The electrode assembly (1000) according to claim 10, wherein the tab structure (2) further comprises a tab group, the tab group comprises the plurality of tabs (21), the tab group comprises a first tab group (3A) and a second tab group (4A), and the first tab group (3A) and the second tab group (4A) are disposed at a same axial end of the winding body (10);
wherein the first tab group (3A) and the second tab group (4A) are respectively disposed on both sides of a winding axis of the winding body (10) and are disposed in alignment with each other.

12. The electrode assembly (1000) according to claim 11, wherein a number of the tabs (21) in the first tab group (3A) is a same as a number of the winding layers of the electrode plate, and the alignment direction of the plurality of tabs (21) is a direction from the second tab group (4A) to the first tab group (3A).

13. The electrode assembly (1000) according to claim 10, wherein a winding direction of the winding body (10) is a width direction of the plurality of tabs (21), and a width of each of the plurality of tabs (21) gradually decreases in the alignment direction of the plurality of tabs (21).

14. The electrode assembly (1000) according to claim 10, wherein the width of each of the plurality of tabs (21) gradually decreases in a direction away from the winding body (10).

15. The electrode assembly (1000) according to claim 10, wherein a side of each of the plurality of tabs (21) away from the electrode plate is arc (6); or,
both ends of the side of the plurality of tabs (21) away from the electrode plate are provided with chamfers (7).

16. The electrode assembly (1000) according to claim 10, wherein the tab group is a first-polarity tab group, the electrode assembly (1000) further comprises a second-polarity tab group, the second-polarity tab group and the first-polarity tab group are disposed at both ends of a same axial end of the winding body (10), respectively, one of the first-polarity tab group and the second-polarity tab group is a positive tab group (2A) and another one of the first-polarity tab group and the second-polarity tab group is a negative tab group (5A).

17. The electrode assembly (1000) according to claim 16, wherein the first polarity tab group is the positive tab group (2A); and

the second-polarity tab group is the negative tab group (5A) and comprises a plurality of negative tabs, the plurality of negative tabs are respectively connected to different winding layers of the negative plate (13) and are disposed in alignment with each other, and a height of each of the plurality of negative tabs gradually decreases in an alignment direction of the plurality of negative tabs.

18. The electrode assembly (1000) according to claim 1, wherein the electrode plate structure (1) comprises a main body portion (110), the main body portion (110) is configured to be wound to form a jelly roll (20), the main body portion (110) comprises a winding starting end (130) and a winding terminating end (140), and a direction from the winding starting end (130) to the winding terminating end (140) is defined as a winding direction;

    wherein the plurality of the tabs (21) are disposed on one side of the main body portion (110) at intervals in the winding direction, and a height of each of the plurality of tabs (21) in an odd-numbered location has an opposite gradient trend to a height of each of the plurality of tabs (21) in an even-numbered location in the winding direction.

19. The electrode assembly (1000) according to claim 18, wherein the height of each of the plurality of tabs (21) in the odd-numbered location decreases and the height of each of the plurality of tabs (21) in the even-numbered location increases, and wherein a height of one of the tabs in a first location is less than a height of one of the tabs in a second location.

20. The electrode assembly (1000) according to claim 18 or 19, wherein the electrode assembly (1000) has a wound state, the wound state corresponds to a winding center surface (210), wherein, in the wound state, each of the plurality of tabs (21) in the odd-numbered location and each of the plurality of tabs (21) in the even-numbered location are respectively disposed on opposite sides of the winding center surface (210), and projections of all the plurality of tabs (21) in the first direction are at least partially overlapped, and wherein the first direction is disposed at an angle to the winding center surface (210).

21. The electrode assembly (1000) according to claim 20, wherein, in the wound state, all the plurality of tabs (21) are bent toward a direction of a connecting plate (8) and welded to the connecting plate (8), and wherein, when the plurality of tabs (21) are in a bent state, a spacing between a free end of a shortest one of the plurality of tabs (21) and a free end of a longest one of the plurality of tabs (21) is Y, and a range of Y is as follows: 0 mm$\leq$Y$\leq$1 mm.

22. The electrode assembly (1000) according to claim 21, wherein a free end of each of the plurality of tabs (21) is flush in a case that the plurality of tabs (21) are in the bent state.

23. The electrode assembly (1000) according to claim 21, wherein the main body portion (110) has a proximity end (160) close to the connecting plate (8) in the first direction, a spacing between the proximity end (160) and the connecting plate (8) is X, and a range of is as follows: 1 mm$\leq$X$\leq$3 mm.

24. A battery comprising:

    at least one electrode assembly (1000) according to any one of claims 1 to 23; and
    a cover plate assembly connected to the at least one tab structure (2) of the electrode assembly (1000).

25. The battery according to claim 24, wherein the cover plate assembly comprises a connecting plate (8);
    one end of each of the plurality of the tabs (21) away from the electrode plate is overlapped and welded to a same surface of the connecting plate (8).

26. The battery according to claim 25, wherein the battery comprises at least two electrode assemblies (1000), tab structures (2) of the at least two electrode assemblies (1000) are aligned, the connecting plate (8) is welded to the tab structures (2) of two adjacent ones of the at least two electrode assemblies (1000).

27. The battery according to claim 24, wherein the cover plate assembly comprises the connecting plate (8), the connecting plate (8) comprises a positive electrode connecting plate (81) and a negative electrode connecting plate (82), the positive electrode connecting plate (81) has a positive tab connecting portion, and the negative electrode connecting plate (82) has a negative tab connecting portion;

    the battery further comprises:
    a housing (30); and
    a core pack (50) disposed in the housing (30), wherein the core pack (50) comprises a jelly roll (20), the jelly roll (20) comprises a main body portion (110) and a separator (12), the main body portion (110) comprises a positive electrode plate and a negative electrode plate, wherein positive tabs of the positive electrode plate are bent and welded to the positive tab connecting portion, and negative tabs of the negative electrode plate are bent and welded to the negative tab connecting portion.

28. The battery according to claim 27, wherein a number of the positive tabs is set to 2n, a height of the positive tab in a (2n-1)-th location is minimum, a height of the positive tab in a 2n location is maximum, and a height of the positive tab in a first location is less than a height of the positive tab in a second location, wherein n≥1, and n is an integer.

29. The battery according to claim 28, wherein the height of the positive tab in the 2n-th location is positively correlated to a sum of lengths of a root of a separator-negative tab and a root of a separator-positive tab, a length of a positive tab welding area, and a length of the positive tab bending area.

30. The battery according to claim 29, wherein the height of the positive tab in the 2n-th location is a, the sum of the lengths of the root of the separator-negative tab and the root of the separator-positive tab is O, the length of the positive tab welding area is L1, and the length of the positive tab bending area is L2, wherein a, O, L1 and L2 satisfy a formula as follows: a=L1+L2+O.

31. The battery according to claim 30, wherein the positive tab connecting portion comprises two connecting tabs (410) spaced apart, and positive tabs of the positive electrode plate are bent and welded to the connecting tabs (410), wherein the length of the positive tab welding area is positively correlated to a width of a welding mark and a width of the connecting tabs (410).

32. The battery according to claim 31, wherein the positive tabs are configured to be welded to the connecting tabs (410) through at least two rounds of welding processes, a width of the welding mark formed on the positive tabs by the last welding process is W2, and the width of the connecting tabs (410) is W3, wherein L1, W2 and W3 satisfy a formula as follows: L1=0.5(W2+W3)+k1, wherein k1 is a first pre-set margin.

33. The battery according to claim 31, wherein at least two of the core packs (50) are disposed, two of the core packs (50) form a core pack pair, the positive tabs are welded to corresponding ones of the connecting tabs (410) after raised by a welding base, wherein the length of the positive tab bending area is positively correlated to a spacing between the two core packs (50) before stacking and a thickness of a single one of the core packs (50), and is negatively correlated to a width of the positive electrode connecting plate, a height raised by the welding base, and a total thickness of all the positive tabs welded to a same one of the connecting tabs (410).

34. The battery according to claim 33, wherein the spacing between the two core packs (50) before stacking is H3, the thickness of the single one of the core packs (50) is T0, the width of the positive electrode connecting plate is W1, the height raised by the welding base is H0, and the total thickness of all the positive tabs welded to the same one of the connecting tabs (410) is H4, wherein L2, H3, W1, T0, H0, and H4 satisfy a formula as follows:

$$L2 = \sqrt{(0.5H3 - 0.5W1)^2 + (T0 - H0 - H4)^2}.$$

35. The battery according to claim 28, wherein the positive tab connecting portion comprises two connecting tabs (410) spaced apart, the positive tabs of the positive electrode plate are bent and welded to the connecting tabs (410), at least two of the core packs (50) are disposed, two of the core packs (50) form a core pack pair, wherein the height of the positive tab in the (2n-1)-th location is positively correlated to a sum of lengths of a root of a separator-negative tab and a root of a separator-positive tab, a spacing between the two core packs (50) in the core pack pair before stacking, a width of a welding mark, and a width of the connecting tabs (410); and is negatively correlated to a width of the positive electrode connecting plate.

36. The battery according to claim 35, wherein the height of the positive tab in the (2n-1)-th location is b, the spacing between the two core packs (50) before stacking is H3, the width of the positive electrode connecting plate (8) is W1, the width of the welding mark is W2, the width of the connecting tabs (410) is W3, and the sum of the lengths of the root of the separator-negative tab and the root of the separator-positive tab is O, wherein b, H3, W1, W2, W3 and O satisfy a formula as follows: b=0.5(H3-W1)+0.5(W2+W3)+O+k2, wherein k2 is a second pre-set margin.

37. The battery according to claim 34 or 36, wherein the spacing between the two core packs (50) before stacking is positively correlated to a spacing between the positive electrode connecting plate and the body portion (110), and a spacing between an edge of the positive electrode connecting plate and an inner side wall of the housing (30).

38. The battery according to claim 37, wherein the spacing between the two core packs (50) before stacking is H3, the spacing between the positive electrode connecting plate and the body portion (110) is D1, and the spacing between the edge of the positive electrode connecting plate and the inner side wall of the housing (30) is D2, wherein H3, D1, D2, and W1 satisfy a formula as follows:

$$H3 = 2\sqrt{D1^2 + D2^2} + W1$$

39. The battery according to claim 38, wherein the housing (30) is connected to a housing cover (310), wherein the spacing between the positive electrode connecting plate and the body portion (110) is positively correlated to a height of the housing (30) and a compression amount of the separator, and is negatively correlated to a spacing between the positive electrode connecting plate and the housing cover (310), a thickness of the positive electrode connecting plate, the total thickness of all the positive tabs welded to the same one of the connecting tabs (410), and a spacing between the separator and a lower surface of the housing (30).

40. The battery according to claim 39, wherein the height of the housing (30) is H10, the compression amount of the separator is k3, the spacing between the positive connecting plate and the housing cover (310) is H6, the thickness of the positive electrode connecting plate is H7, the total thickness of all the positive tabs welded to the same one of the connecting tabs (410) is H4, and the spacing between the separator and the lower surface of the housing (30) is H9, wherein D1, H10, k3, H6, H7, H4 and H9 satisfy a formula as follows: D1=H10-H6-H7-H4-(H9-k3).

41. The battery according to claim 40, wherein the compression amount of the separator falls within a range as follows: $1.5 \leq k3 \leq 2.5$.

42. The battery according to claim 41, wherein a total thickness of the two core packs (50) is W6, and a width of the housing (30) is W5, wherein W6, W1, D2, and W5 satisfy a formula as follows: $0.5(W6-W1) \leq D2 \leq 0.5(W5-W1)$.

43. The battery according to claim 42, wherein the spacing between the positive electrode connecting plate and the body portion (110) has a maximum value D1max and a minimum value D1min, respectively, and the spacing between the edge of the positive electrode connecting plate and the inner side wall of the housing (30) has a maximum value D2max and a minimum value D2min, respectively, wherein D1max=H10-H6-H7-H4-(H9-2.5), D1min=H10-H6-H7-H4-(H9-1.5), D2max=0.5(W5-W1), and D2min=0.5(W6-W1), and wherein D1max, D1min, D2max, D2min, H3, and W1 satisfy a formula as follows:

$$2\sqrt{D1_{max}^2 + D2_{max}^2} + W1 \leq H3 \leq 2\sqrt{D1_{min}^2 + D2_{min}^2} + W1.$$

44. The battery according to any one of claims 28 to 43, wherein (2n+2) of the negative tabs are disposed, a height of the negative tab in a (2n+1)-th location is minimum, a height of the negative tab in a (2n+2)-th location is maximum, and a height of the negative tab in a first location is less than a height of the negative tab in a second location, wherein the height of the negative tab in the (2n+2)-th location is same as a height of the positive tab in a 2n-th location.

45. A battery pack comprising the battery according to any one of claims 24 to 44.

46. A method of designing an electrode assembly, wherein the method is used for the battery according to any one of claims 27 to 44, and the method comprises:

obtaining a maximum height of the plurality of tabs (21) and a minimum height of the plurality of tabs (21) based on design parameters of the battery; and
allowing the height of each of the plurality of tabs (21) in the odd-numbered location to have an opposite gradient trend to the height of each of the plurality of tabs (21) in the even-numbered location in the winding direction, and allowing the projections of all the plurality of tabs (21) welded to the tab connecting portion of a same connecting plate (8) in a same jelly roll (20) to be at least partially overlapped in a first direction.

**47.** The method according to claim 46, wherein the design parameters of the battery comprise first design parameters and second design parameters, at least two of the core packs (50) are disposed, two of the core packs (50) form a core pair, and wherein the step of "obtaining the maximum height of the plurality of tabs (21) and the minimum height of the plurality of tabs (21) based on design parameters of the battery" comprises:

obtaining the spacing between the two core packs (50) in the core pack pair before stacking based on the first design parameters; and

obtaining the maximum height of the plurality of tabs (21) and the minimum height of the plurality of tabs (21) based on the second design parameters and the spacing between the two core packs (50) before stacking.

**48.** The method according to claim 47, wherein the tab connecting portion comprises two ones of the connection tabs (410) that are spaced from each other, the plurality of tabs (21) are bent and welded to the connection tabs (410), and the first design parameters comprise: the height of the housing (30), the compression amount of the separator, the spacing between the connecting plate (8) and the housing cover (310), the thickness of the connecting plate (8), the total thickness of all the plurality of tabs (21) welded to the same connecting tab (410), the spacing between the separator and the lower surface of the housing (30), the total thickness of the two core packs (50), and the width of the housing (30).

**49.** The method according to claim 48, wherein the step of "obtaining the spacing between the two core packs (50) in the core pack pair before stacking based on the first design parameters" comprises:

obtaining the spacing D1 between the connecting plate (8) and the main body portion (110) based on the height H10 of the housing (30), the compression amount k3 of the separator, the spacing H6 between the connecting plate (8) and the housing cover (310), the thickness H7 of the connecting plate (8), the total thickness H4 of all the plurality of tabs (21) welded to the same connecting tab (410), and the spacing H9 between the separator and the lower surface of the housing (30), wherein D1, H10, k3, H6, H7, H4, and H9 satisfy a formula as follows:

$$D1=H10-H6-H7-H4-(H9-k3);$$

obtaining the spacing D2 between the edge of the connecting plate (8) and the inner side wall of the housing (30) based on the total thickness W6 of the two core packs (50), the width W5 of the housing (30), and the width W1 of the connecting plate (8), wherein D2, W6, W5 and W1 satisfy a formula as follows: $0.5(W6-W1){\leq}D2{\leq}0.5(W5-W1)$; and

obtaining the spacing H3 between the two core packs (50) before stacking based on the spacing D1 between the connecting plate (8) and the main body portion (110), and the spacing D2 between the edge of the connecting plate (8) and the inner side wall of the housing (30), wherein H3, D1, D2, and W1 satisfy a formula as follows:

$$H3 = 2\sqrt{D1^2 + D2^2} + W1$$

**50.** The method according to claim 49, wherein the spacing between the connecting plate (8) and the body portion (110) has a maximum value D1max and a minimum value D1min, respectively, and the spacing between the edge of the connecting plate (8) and the inner side wall of the housing (30) has a maximum value D2max and a minimum value D2min, respectively, wherein D1max=H10-H6-H7-H4-(H9-2.5), D1min=H10-H6-H7-H4-(H9-1.5), D2max=0.5(W5-W1), and D2min=0.5(W6-W1), and wherein D1max, D1min, D2max, D2min, H3, and W1 satisfy a formula as follows:

$$2\sqrt{D1^2_{max} + D2^2_{max}} + W1 {\leqslant} H3 {\leqslant} 2\sqrt{D1^2_{min} + D2^2_{min}} + W1$$

**51.** The method according to claim 47, wherein the tab connecting portion comprises two ones of the connection tabs (410) that are spaced from each other, the plurality of tabs (21) are bent and welded to the connection tabs (410), and the second design parameter comprises: the sum of the lengths of the root of the separator-negative tab and the root of the separator-positive tab, the width of the welding mark, the width of the connecting tabs (410), the first pre-set margin, the second pre-set margin, the width of the connecting plate (8), the thickness of a single core pack (50), and the height raised by the welding base.

**52.** The method according to claim 51, wherein the step of "obtaining the maximum height of the plurality of tabs (21) and the minimum height of the plurality of tabs (21) based on the second design parameters and the spacing between the two core packs (50) before stacking" comprises:

obtaining the length L1 of the positive tab welding area based on the width W2 of the welding mark, the width W3 of the connecting tab (410), and the first pre-set margin k1, wherein L1, W2, W3, and k1 satisfy a formula as follows:

$$L1=0.5(W2+W3)+k1;$$

obtaining the length L2 of the positive tab bending area based on the spacing H3 between the two core packs (50) before stacking, the width W1 of the connecting plate (8), the thickness T0 of the single core pack (50), and the height H4 raised by the welding base, wherein, L2, H3, W1, T0, H0, and H4 satisfy a formula as follows:

$$L2 = \sqrt{(0.5H3 - 0.5W1)^2 + (T0 - H0 - H4)^2}\ ;$$

and
obtaining the maximum height a of the plurality of tab (21) based on the sum O of the lengths of the root of the separator-negative tab and the root of the separator-positive tab, the length L1 of the positive tab welding area, and the length L2 of the positive tab bending area, wherein a, O, L1 and L2 satisfy a formula as follows:

$$a=L1+L2+O.$$

53. The method according to claim 51, wherein the step of "obtaining the maximum height of the plurality of tabs (21) and the minimum height of the plurality of tabs (21) based on the second design parameters and the spacing between the two core packs (50) before stacking" further comprises:
obtaining the minimum height b of the plurality of tabs (21) based on the sum O of the lengths of the root of the separator-negative tab and the root of the separator-positive tab, the spacing H3 between the two core packs (50) before stacking, the width W1 of the connecting plate (8), the width W2 of the welding mark, the width W3 of the connecting tabs (410), and the second pre-set margin k2, wherein b, H3, W1, W2, W3, and O satisfy a formula as follows:

$$b=0.5(H3-W1)+0.5(W2+W3)+O+k2.$$

54. The method according to any one of claims 46 to 53, wherein the step of "allowing the height of each of the plurality of tabs (21) in the odd-numbered location to have an opposite gradient trend to the height of each of the plurality of tabs (21) in the even-numbered location in the winding direction, and allowing the projections of all the plurality of tabs (21) welded to the tab connecting portion of a same connecting plate (8) in a same jelly roll (20) to be at least partially overlapped in a first direction" comprises:
allowing the heights of the plurality of tabs (21) in the odd-numbered locations to decrease progressively and the heights of the plurality of tabs (21) in the even-numbered locations to increase progressively in the winding direction, and allowing the projections of all the plurality of tabs (21) welded to the same connecting tab (410) in the same jelly roll (20) to be at least partially overlapped in a first direction.

55. The method according to claim 54, wherein the step of "allowing the heights of the plurality of tabs (21) in the odd-numbered locations to decrease progressively and the heights of the plurality of tabs (21) disposed in the even-numbered locations to increase progressively in the winding direction, and allowing the projections of all the plurality of tabs (21) welded to the same connecting tab (410) in the same jelly roll (20) to be at least partially overlapped in a first direction" comprises:

Obtaining a tolerance of change in the heights of the plurality of tabs (21) based on the number of the tabs 21, the maximum height of the plurality of tabs (21), and the minimum height of the plurality of tabs (21); and
allowing the heights of the plurality of tabs (21) in the odd-numbered locations to be decreased - by a value of the tolerance and the heights of the plurality of tabs (21) in the even-numbered locations to be increased progressively by the value of the tolerance in the winding direction, allowing the height of the tab (21) in the first location to be less than the height of the tab (21) in the second location, and allowing the projections of all the plurality of tabs (21) welded to the same connecting tab (410) in the same jelly roll (20) to be at least partially overlapped in the first

direction.

1000

FIG. 1

21
21
21

FIG. 2

21

5                                                                      5

21
21
11
21

Y

FIG. 3

FIG. 4

FIG. 5

FIG. 6

FIG. 7

FIG. 8

FIG. 9

FIG. 10

FIG. 11

21

FIG. 12

21

FIG. 13

FIG. 14

FIG. 15

FIG. 16

**Winding direction**

FIG. 17

FIG. 18

FIG. 19

FIG. 20

FIG. 21

FIG. 22

Obtaining a maximum height of the plurality of tabs and a minimum height of the plurality of tabs based on design parameters of the battery — S810

Allowing the height of each of the plurality of tabs in the odd-numbered location to have an opposite gradient trend to the height of each of the plurality of tabs in the even-numbered location in the winding direction, and allowing the projections of all the plurality of tabs welded to the tab connecting portion of a same connecting plate in a same jelly roll to be at least partially overlapped in a first direction — S820

FIG. 23

Obtaining the spacing between the two core packs in the core pack pair before stacking based on the first design parameters — S910

Obtaining the maximum height of the plurality of tabs and the minimum height of the plurality of tabs based on the second design parameters and the spacing between the two core packs before stacking — S920

FIG. 24

Obtaining the spacing D1 between the connecting plate and the main body portion based on the height H10 of the housing, the compression amount k3 of the separator, the spacing H6 between the connecting plate and the housing cover, the thickness H7 of the connecting plate, the total thickness H4 of all the plurality of tabs welded to the same connecting tab, and the spacing H9 between the separator and the lower surface of the housing — S1010

Obtaining the spacing D2 between the edge of the connecting plate and the inner side wall of the housing based on the total thickness W6 of the two core packs, the width W5 of the housing, and the width W1 of the connecting plate — S1020

Obtaining the spacing H3 between the two core packs before stacking based on the spacing D1 between the connecting plate and the main body portion, and the spacing D2 between the edge of the connecting plate and the inner side wall of the housing — S1030

FIG. 25

Obtaining the length L1 of the positive tab welding area based on the width W2 of the welding mark, the width W3 of the connecting tab, and the first pre-set margin k1 — S1110

Obtaining the length L2 of the positive tab bending area based on the spacing H3 between the two core packs before stacking, the width W1 of the connecting plate, the thickness T0 of the single core pack, and the height H4 raised by the welding base — S1120

Obtaining the maximum height a of the plurality of tab based on the sum O of the lengths of the root of the separator-negative tab and the root of the separator-positive tab, the length L1 of the positive tab welding area, and the length L2 of the positive tab bending area — S1130

FIG. 26

### INTERNATIONAL SEARCH REPORT

| International application No. |
| --- |
| **PCT/CN2025/088763** |

**A. CLASSIFICATION OF SUBJECT MATTER**

H01M 4/02(2006.01)i; H01M 4/13(2010.01)i; H01M 50/528(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, CNABS, DWPI, Elsevier Science Direct, ISI Web of Science, 读秀, DUXIU, 超星科技数字图书馆, Chao Xing Science and Technology Digital Library: 湖北亿纬动力有限公司, 屈红娇, 丁静, 李旺轩, 贺 萌, 刘汉祥, 不等, 不同, 不相等, 不相同, 长, 尺寸, 大小, 极耳, 导流片, 递减, 递增, 端子, 二, 高, 规格, 集流体, 减, 接线片, 宽, 连接片, 面积, 偶, 奇, 双, 形状, 引片, 引线, 增, diameter, double, second, size, twin, tab??, odd?, lead+, lug??

**C. DOCUMENTS CONSIDERED TO BE RELEVANT**

| Category* | Citation of document, with indication, where appropriate, of the relevant passages | Relevant to claim No. |
| --- | --- | --- |
| PX | CN 119601571 A (EVE POWER CO., LTD.) 11 March 2025 (2025-03-11) description, paragraphs 4-70 | 1-55 |
| X | CN 114094288 A (JIANGSU CONTEMPORARY AMPEREX TECHNOLOGY LTD.) 25 February 2022 (2022-02-25) description, specific embodiments | 1-17, 24-27, 45 |
| X | CN 108461811 A (SHANGHAI RUIPU QINGCHUANG NEW ENERGY CO., LTD. et al.) 28 August 2018 (2018-08-28) description, paragraphs 3-14 | 1-17, 24-27, 45 |
| X | CN 117913376 A (GUANGZHOU RONGJIE ENERGY TECHNOLOGY CO., LTD.) 19 April 2024 (2024-04-19) description, paragraphs 23-46 | 1-17, 24-27, 45 |
| X | CN 217387465 U (HUIZHOU LIWINON NEW ENERGY TECHNOLOGY CO., LTD.) 06 September 2022 (2022-09-06) description, paragraphs 6-17 | 1-17, 24-27, 45 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 August 2025** | **25 August 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/088763** |

**C.      DOCUMENTS CONSIDERED TO BE RELEVANT**

| Category* | Citation of document, with indication, where appropriate, of the relevant passages | Relevant to claim No. |
| --- | --- | --- |
| X | CN 221239759 U (ENVISION RUITAI POWER TECHNOLOGY (SHANGHAI) CO., LTD. et al.) 28 June 2024 (2024-06-28)<br>      specific embodiments | 1-17, 24-27 ,45 |
| X | CN 116686157 A (CONTEMPORARY AMPEREX TECHNOLOGY CO., LTD.) 01 September 2023 (2023-09-01)<br>      description, paragraphs 5-42 | 1-17, 24-27, 45 |
| X | CN 219419440 U (EVE ENERGY CO., LTD.) 25 July 2023 (2023-07-25)<br>      description, paragraphs 5-18 | 1-17, 24-27, 45 |
| X | JP 2021028896 A (TOYOTA INDUSTRIES CORP.) 25 February 2021 (2021-02-25)<br>      description, paragraphs 27-36 | 1-17, 24-27, 45 |
| A | CN 117936930 A (SUNWODA MOBILITY ENERGY TECHNOLOGY CO., LTD.) 26 April 2024 (2024-04-26)<br>      entire document | 1-55 |

Form PCT/ISA/210 (second sheet) (July 2022)

TRANSLATION

**INTERNATIONAL SEARCH REPORT**
**Information on patent family members**

International application No.

**PCT/CN2025/088763**

| Patent document cited in search report | | | Publication date (day/month/year) | Patent family member(s) | | | Publication date (day/month/year) |
|---|---|---|---|---|---|---|---|
| CN | 119601571 | A | 11 March 2025 | None | | | |
| CN | 114094288 | A | 25 February 2022 | WO | 2023137950 | A1 | 27 July 2023 |
| CN | 108461811 | A | 28 August 2018 | None | | | |
| CN | 117913376 | A | 19 April 2024 | None | | | |
| CN | 217387465 | U | 06 September 2022 | None | | | |
| CN | 221239759 | U | 28 June 2024 | None | | | |
| CN | 116686157 | A | 01 September 2023 | WO | 2023028815 | A1 | 09 March 2023 |
| | | | | KR | 20230051257 | A | 17 April 2023 |
| | | | | EP | 4195399 | A1 | 14 June 2023 |
| | | | | US | 2023216077 | A1 | 06 July 2023 |
| CN | 219419440 | U | 25 July 2023 | None | | | |
| JP | 2021028896 | A | 25 February 2021 | None | | | |
| CN | 117936930 | A | 26 April 2024 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411676417X
- CN 202422836055
- CN 202421847945